# NEUE EUROPÄISCHE PATENTSCHRIFT

(11) **EP 0 934 180 B2**
(45) Veröffentlichungstag und Bekanntmachung des Hinweises auf die Entscheidung über den Einspruch: **19.08.2009**
(45) Hinweis auf die Patenterteilung: 04.10.2000
(21) Anmeldenummer: 97944681.2
(22) Anmeldetag: 29.10.1997
(51) Int. Cl.: B60R 13/08, G10K 11/168, B32B 5/22

(54) **ULTRALEICHTER MULTIFUNKTIONALER, SCHALLISOLIERENDER BAUSATZ**
ULTRALIGHT, MULTIFUNCTIONAL SOUND-INSULATING KIT
ENSEMBLE D'ISOLATION PHONIQUE MULTIFONCTIONNEL ULTRALEGER

(30) Priorität: 29.10.1996 CH 38196
(43) Veröffentlichungstag der Anmeldung: 11.08.1999
(73) Patentinhaber: RIETER AUTOMOTIVE (INTERNATIONAL) AG, 8702 Zollikon (CH)
(72) Erfinder: ALTS, Thorsten, D-64401 Gross-Bieberau (DE)
(74) Vertreter: Van Adrichem Geisseler, Johanna
(86) Internationale Anmeldenummer: PCT/CH1997/000412
(87) Internationale Veröffentlichungsnummer: WO 1998/018657

(56) Entgegenhaltungen:
- EP-A- 0 118 876
- EP-A- 0 229 977
- EP-A- 0 334 178
- EP-A- 0 732 684
- EP-A1- 0 474 593
- EP-A2- 0 255 332
- DE-A- 2 817 580
- DE-A1- 3 724 680
- DE-A1- 19 500 725
- DE-U- 8 602 592
- GB-A- 2 163 388
- US-A- 5 298 694
- US-A- 5 504 282

## Beschreibung

Die vorliegende Erfindung betrifft einen multifunktionalen Bausatz für die Lärmreduktion und Wärmeisolation in Fahrzeugen gemäss Oberbegriff des Anspruchs 1.

Grossflächige Fahrzeugteile, wie Bodenblech, Dachblech, Motorhaube, Kofferraumdeckel, Stirnwände oder Türen und Seitenverkleidungen neigen aufgrund ihrer geringen Eigenstabilität dazu, sich beim Fahren zu deformieren, zu vibrieren und zu schwingen. Diesem Verhalten wird konventionellerweise durch das Anbringen von Dämpfungsmaterial, insbesondere von Schwerschichten aus Bitumen entgegengewirkt. Um die Übertragung von Fahrgeräuschen ins Wageninnere zu reduzieren, werden in der Automobilindustrie seit längerem zusätzlich mehrschichtige Schallisolationspakete eingesetzt. Insbesondere sollen durch diese Schallisolationspakete Geräusche vom Fahrzeugmotor, vom Getriebe und von Hilfsaggregaten, vom Auspuffsystem aber auch Wind- oder Reifengeräusche wirksam isoliert werden. Diese Schallisolationspakete sind in der Regel als Feder-Masse-Systeme konzipiert und weisen alle eine mit einer elastischen Federschicht gekoppelte luftdichte Schwerschicht auf, um die Vibrationen der grossflächigen Karrosserieteile zu dämpfen und den Luftschalldurchgang zu dämmen.

Ein solches Schallisolationspaket ist beispielsweise in der EP-0'334'178 beschrieben und umfasst im wesentlichen eine dem schwingfähigen Karrosserieteil zugewandte weichelastische Schaumstoffschicht, welche als Feder des Feder-Masse-Systems wirkt, eine als Masse des Feder-Masse-Systems wirkende, nahezu kompakte, luftundurchlässige und verfestigte Schicht aus demselben Material, wobei dieses zur Verfestigung in ein Gerüst aus Vlies oder Schnittschaum eingebracht ist, sowie eine darüber angeordnete Dekorabdeckung resp. Teppichschicht. Durch diesen Aufbau kann das Gewicht der Schwerschicht um bis zu 40% reduziert werden und kann damit auch das Gewicht des gesamten Schallisolationssystems gegenüber den bekannten Feder-Masse-Systemen, allerdings mit Einbussen bei der akustischen Wirksamkeit, reduziert werden.

In der EP-0'255'332 wird ein Schallisolationspaket offenbart, welches mit Hilfe einer halbflexiblen Trägerschicht, in Art eines Schnappverschlusses, gegen das Fahrzeugdach gespannt wird. Mit dieser Trägerschicht wird ein klassisches Feder-Masse-System aus einer federnden, schallabsorbierenden Schaumschicht und einer viscoelastischen, geschlossenporigen Schwerschicht (bitumengefüllt) gegen das Fahrzeugdach angepresst. Durch das kraftschlüssige Verbinden der Schwerschicht mit dem Fahrzeugdach werden die Vibrationen desselben besser gedämpft und braucht die Schwerschicht nicht mehr die ganze Fläche zu bedecken.

Generell führen Feder-Masse-Anordnungen jedoch immer zu Resonanzeinbrüchen in der Schallisolation, die üblicherweise im Frequenzbereich der niederen Motorordnungen liegen und dort besonders unerwünscht sind. Dieses Phänomen verbietet grundsätzlich eine extreme Leichtbauweise.

Es ist das generelle Bestreben der Automobilindustrie, das Gewicht der Fahrzeuge zu reduzieren. Dies hat zur Folge, dass vermehrt auch dünnere und leichtere Karrosserieteile eingesetzt werden, die zu wesentlichen akustischen Nachteilen führen. Die Anforderungen an die Schallisolationspakete werden durch die Verwendung von leichtgewichtigen Karrosserieteilen nennenswert erhöht.

Der Erfindung liegt daher die Aufgabe zugrunde, einen ultraleichten Bausatz zu schaffen, welcher auch mit leichtgewichtigen Karrosserieteilen, bspw. aus Aluminium oder Kunststoff, keinen Verlust an akustischer Wirksamkeit aufweist.

Insbesondere soll ein schallisolierender Bausatz geschaffen werden, der über 50% leichter ist als herkömmliche Schallisolationspakete und darüber hinaus auch gute wärmeisolierende Eigenschaften aufweist.

Diese Aufgabe wird erfindungsgemäss generell durch einen Bausatz mit den Merkmalen des Anspruchs 1 gelöst und insbesondere dadurch gelöst, dass die luftundurchlässige Schwerschicht bei konventionellen Feder-Masse-Systemen durch eine relativ dünne, mikroporöse und steife Faserschicht, bzw. Faser/Schaum-Verbundschicht ersetzt wird. Diese mikroporöse Faserschicht ist offenporig und weist einen relativ hohen Luftströmungswiderstand auf. Wesentlich für die Lösung der gestellten Aufgabe ist die Bildung einer Luftschicht im schallisolierenden Bausatz, welche Luftschicht vorzugweise zwischen dem flächigen Karosserieteil und den anderen Schichten liegt. Damit wird grundsätzlich das Gewicht des Dämmungsmechanismus bei herkömmlichen Feder-Masse-Systeme zugunsten einer verbesserten Schallabsorption reduziert. Die Wirksamkeit des erfindungsgemässen Bausatzes beruht also auf einer optimalen Kombination von Schalldämmung und -absorption. Die erfindungsgemäss erzielte wesentliche Erhöhung des Absorptionskoeffizienten führt dazu, dass dieser Bausatz einen extrem leichten Aufbau aufweist und auch mit leichtgewichtigen Karosserieteilen keine Einbusse an akustischer Wirksamkeit aufweist. Darüberhinaus zeigt sich bei dem erfindungsgemässen Bausatz überraschend auch eine wesentliche Verbesserung der Isolation im Bereich des normalerweise auftretenden Resonanzeinbruchs.

In einer ersten Ausführungsform umfasst der erfindungsgemässe multifunktionale Bausatz im wesentlichen eine dem schwingfähigen Karrosserieteil zugewandte, weichelastische, offenporige Federschicht aus Schaum oder Faservlies, eine mikroporöse und leichte Versteifungsschicht, insbesondere eine steif verpresste Faserschicht bzw. Faser/Schaum-Verbundschicht, sowie eine darüber angeordnete poröse Deckschicht resp. Teppich- oder Schutzschicht. Alle diese Schichten können mechanisch (genadelt) oder durch partielle luftdurchlässige Verklebungen miteinander zu einem Verbundteil verbunden sein. In einer Weiterbildung dieser Ausführungsform umfasst der erfindungsgemässe Bausatz karosserieseitig eine partiell oder vollflächig ausgelegte, leichte Dämpfungsschicht, welche vorzugsweise ein Oberflächenmuster gemäss Patent EP 0 474 593 aufweist und auf das Karrosserieblech aufgelegt ist. In ebenen Bereichen der Karosserie kann eine leichte "Constrained Layer"-Dämpfung aus ultraleichtem Bitumen und einer zugfesten Folie aus Aluminium oder faserverstärktem Kunststoffpapier eingesetzt werden. Diese wird konventionell mit dem Blech verklebt.

Weitere bevorzugte Ausführungsformen sind in den Unteransprüchen der vorliegenden Anmeldung ausgeführt.

Durch eine akustische Optimierung der weichelastischen offenporigen Schicht im Verbund mit der darüber angeordneten, ebenfalls offenporigen, mikroporösen Faserschicht bzw. Faser/Schaum-Verbundschicht erreicht man damit a) eine Schallisolation ohne Resonanzeinbrüche, b) eine Schallabsorption auf der Dekor- bzw. Teppichseite, die bereits im tieffrequenten Bereich wirksam ist, c) eine Wärmedämmung, die bei Fahrzeugen mit sehr geringem Benzinverbrauch vorteilhaft ist und d) eine wesentliche Gewichtsreduktion von über 50% im Vergleich zum klassischen Feder-Masse-Aufbau bei Fahrzeugen mit Stahlkarosserie und mit gleichzeitiger verbesserter akustischer Gesamtwirksamkeit.

Nachfolgend soll die Erfindung anhand einiger Ausführungsbeispiele und mit Hilfe der Figuren näher erläutert werden. Dabei zeigt:
- Fig. 1:: einen klassischen Aufbau einer Bodengruppe;
- Fig. 2:: den Verlauf des Absorptionskoeffizienten als Funktion der Frequenz für die Bodengruppe gemäss Fig. 1;
- Fig. 3:: den Verlauf der Isolation als Funktion der Frequenz für die Bodengruppe gemäss Fig. 1;
- Fig. 4:: den prinzipiellen Aufbau des erfindungsgemässen Bausatzes;
- Fig. 5:: ein erfindungsgemässer Bausatz für die Bodenisolation oder innere Stirnwandverkleidung;
- Fig. 6:: den Verlauf des Absorptionskoeffizienten als Funktion der Frequenz für den Bausatz gemäss Figur 5;
- Fig. 7:: den Verlauf der Isolation als Funktion der Frequenz für den Bausatz gemäss Figur 5;
- Fig. 8:: ein Aufbau durch eine erfindungsgemässe Dachinnenverkleidung;
- Fig. 9:: ein Aufbau durch eine erfindungsgemässe Türverkleidung;
- Fig. 10:: ein Aufbau durch eine erfindunggemässe, geklebte äussere Stirnwand;
- Fig. 11:: ein Aufbau durch eine erfindungsgemässe, aufgelegte äussere Stirnwand.

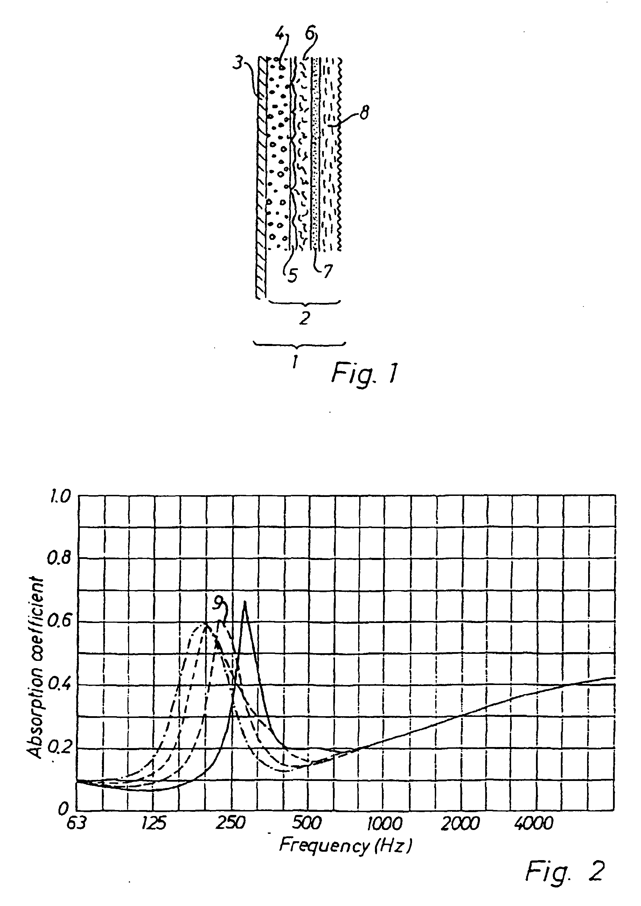

Die in Figur 1 gezeigte konventionelle Bodengruppe 1 umfasst ein aus mehreren Schichten aufgebautes Schallisolationspaket 2, welches auf einem flächigen Karosserieteil 3 befestigt ist. Bei herkömmlichen Fahrzeugen ist dieses Karosserieteil aus einem ca. 0.8 mm dicken Stahlblech gefertigt, welches ein Flächengewicht von ca. 6.32 kg/m² aufweist. Auf diesem Karosserieteil 3 ist eine Dämpfungsschicht 4, in der Regel eine ca. 2.2 mm dicke Bitumen-Lage, mit ca. 3.5 kg/m² Flächengewicht aufgebracht. Mit dieser Dämpfungsschicht 4 werden im wesentlichen hochfrequente Schwingungen gedämpft. Auf diese Dämpfungsschicht 4 wird in der Regel ein Feder-Masse-System lose aufgelegt, sodass zwischen der Dämpfungsschicht 4 und dem Feder-Masse-System eine ca. 0.2 mm dicke Luftschicht 5 entsteht. Das Feder-Masse-System umfasst eine ca. 15 mm dicke Faserschicht 6 mit einem Raumgewicht von ca. 70 kg/m³ resp. einem Flächengewicht von ca. 1.05 kg/m². Anstelle dieser Faserschicht 6 werden auch ähnlich schwere elastische Schaumschichten verwendet. Damit verbunden ist eine ca. 2 mm dicke, luftundurchlässige Schwerschicht 7 mit einem Flächengewicht von ca. 4.0 kg/m² auf welcher wiederum ein bspw. ca. 5.0 mm dicker Teppich 8 von ca. 0.6 kg/m² Flächengewicht aufgebracht ist. Diese klassische Bodengruppe weist also ein Gesamtflächengewicht von ca. 15.47 kg/m² auf, wovon das Flächengewicht des Schallisolationspaketes 2 einen Anteil von ca. 9.15 kg/m² ausmacht.

Die in Figur 2 dargestellte Kurve 9 zeigt das Verhalten des Absorptionskoeffizienten als Funktion der Frequenz dieser Bodengruppe 1. Daraus ist deutlich erkennbar, dass dieses Schallisolationspaket im Bereich von 200 Hz eine ausgeprägte Resonanzabsorption aufweist, und im Bereich oberhalb 500 Hz eine deutlich schlechtere Absorption zeigt, die sich mit zunehmender Frequenz leicht verbessert. Diese leicht steigende Absorption wird nur noch von den Teppicheigenschaften verursacht.

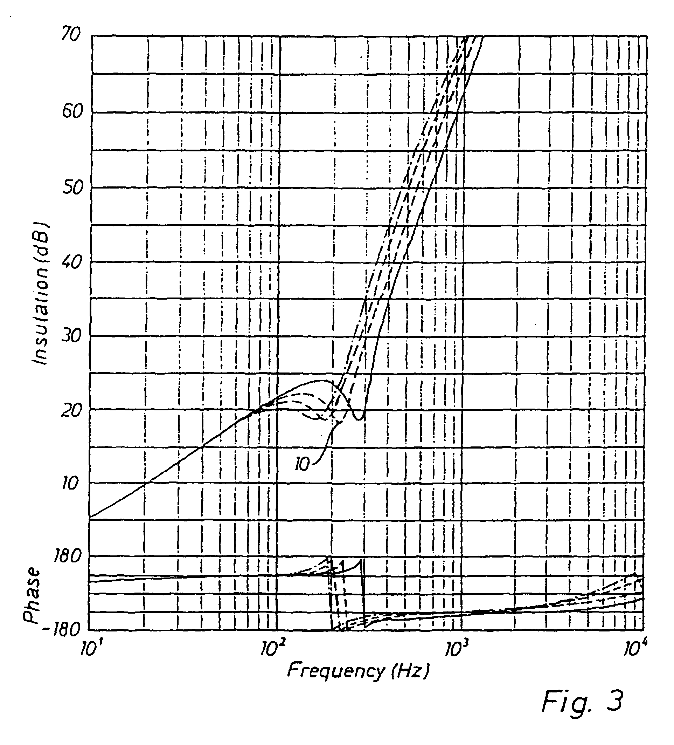

Der in Figur 3 dargestellte und zu dieser Bodengruppe 1 gehörende frequenzabhängige Verlauf 10 der Isolation macht die Dämmung des hochfrequenten Schalls deutlich, und zeigt einen für alle Feder-Masse-Systeme charakteristischen Isolationseinbruch im Bereich von 200 Hz.

Bei der Verwendung von ca. 1.1 mm dickem Aluminiumblech anstelle des ca. 0.8 mm dickem Stahlblechs als Karosserieteil 3 wird mit diesen herkömmlichen Isolationssystemen die Gesamtdämmung um ca. 6 dB verschlechtert und der Resonanzeinbruch der Isolation und die Resonanzabsorption verschieben sich zu etwas höheren Frequenzen in den Bereich um 250 Hz. Dies ist auf die Massenhalbierung bei Verwendung von Aluminium anstelle von Stahl zurückzuführen.

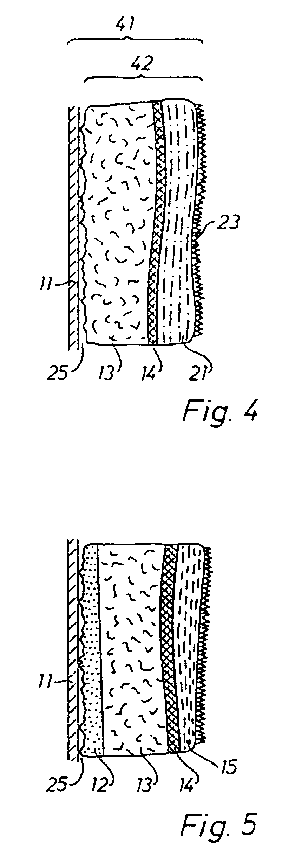

Der in Figur 4 gezeigte prinzipielle Aufbau des erfindungsgemässen Bausatzes 41 umfasst im wesentlichen ein flächiges Fahrzeugteil 11 und ein daran anliegendes Montagepaket 42. Dieses Montagepaket 42 umfasst mehrere Schichten und notwendigerweise eine poröse Federschicht 13 und eine mikroporöse Versteifungsschicht 14. Die poröse Federschicht 13 wird vorzugsweise aus einer offenporigen Schaumschicht gebildet. Die mikroporöse Versteifungsschicht 14 besteht vorzugsweise aus einer offenporigen Faserschicht oder Faser-/Schaum-Verbundschicht, welche einen totalen Luftströmungswiderstand von Rₜ=500Nsm⁻³ bis Rₜ=2500Nsm⁻³, insbesondere von Rₜ=900Nsm⁻³ bis Rₜ=2000Nsm⁻³, und eine Flächenmasse von m_{F}=0.3kg/m² bis m_{F}=2.0kg/m², insbesondere von m_{F}=0.5kg/m² bis m_{F}=1.6kg/m² aufweist. Hilfsweise können weitere Schichten 21 und 23 aufgebracht sein. Wesentlich für die akustische Wirksamkeit des multifunktionalen Bausatzes 41 ist eine Luftschicht 25 zwischen dem Montagepaket 42 und dem flächigen Fahrzeugteil 11. Um diese akustische Wirksamkeit weiter zu verbessern, weist die mikroporöse Versteifungsschicht 14 eine Biegesteifigkeit von B=0.005Nm bis B=10.5Nm, insbesondere von B=0.025Nm bis B=6.0Nm.

Der erfindungsgemässe ultraleichte Bausatz gemäss Figur 5 ist für den Aufbau einer Bodenisolation resp. inneren Stirnwandverkleidung besonders geeignet. Er umfasst ein ca. 1.1 mm dickes Aluminium-Karosserieteil 11, auf welches eine leichte Dämpfungsschicht 12, beispielsweise eine SDL-Dämpfungsschicht, unter Bildung einer Luftschicht 25 aufgelegt ist. Solche SDL-Dämpfungsschichten sind bekannt und besitzen in der Regel ein Oberflächenmuster gemäss Patent EP 0 474 593 und eine spezielle bituminöse Materialzusammensetzung. Diese werden mit dem Muster auf das Blech aufgelegt und sind mit dem Weichschaumsystem fest verbunden. Die effektive Dichte dieser Dämpfungsschicht 12 beträgt ρ_{eff} = 1100 kg/m³. In dem vorliegenden Ausführungsbeispiel wird eine ca. 2.0 mm dicke Dämpfungsschicht mit einem Flächengewicht von ca. 2.4 kg/m² verwendet. Darauf ist eine ca. 25 mm dicke Schicht eines Formschaums 13 mit einem Raumgewicht von ca. 20 kg/m³, resp. einem Flächengewicht von ca. 0.4 kg/m² bis 1.75 kg/m² aufgelegt. Diese Formschaumschicht 13 ist insbesondere eine Thermoformschaumschicht und ist offenporig und mit einer ca. 1.5 mm bis 5.0 mm dicken mikroporösen, steifen Faserschicht 14 von ca. 0.6 kg/m² bis 1.6 kg/m² Flächengewicht verbunden. Als Dämpfungsschicht eignen sich auch ultraleichte bituminöse Dämpfungsschichten aus mehreren Schichten, die beispielsweise eine Aluminiumfolie oder faserverstärktes Kunststoffpapier umfassen, oder bitumenfreie Dämpfungsmaterialien, beispielsweise EPDM oder Formschaum mit einem effektiven Raumgewicht von ca. 40 kg/m³. Die mikroporöse Faserschicht 14 ist derart, dass diese einen totalen Luftströmungswiderstandswert von Rₜ=500-Nsm⁻³ bis Rₜ=2500Nsm⁻³, insbesondere von Rₜ=900Nsm⁻³ bis Rₜ=2000Nsm⁻³, eine Flächenmasse von m_{F}=0.3kg/m² bis m_{F}=2.0kg/m², insbesondere von m_{F}=0.5kg/m² bis m_{F}=1.6kg/m² und eine Biegesteifigkeit von B=0.005Nm bis B=10.5Nm, insbesondere von B=0.025Nm bis B=6.0Nm aufweist. Diese Mikroporosität und Steifigkeit sind wesentlich für die Absorptionsfähigkeit des gesamten Montagepaketes und können durch geeignete Wahl verschiedener Materialien erreicht werden. Bei der Verwendung als Bodenisolation ist eine Teppich- oder Dekorschicht 15 fahrgastraumseitig mit dieser mikroporösen, steifen Faserschicht 14 verbunden und weist in diesem Ausführungsbeispiel eine Dicke von ca. 5 mm resp. ein Flächengewicht von ca. 0.6 kg/m² auf. Das erfindungsgemässe Montagepaket 42 wiegt damit lediglich ca. 4.1 kg/m² und erlaubt es, das Gewicht der gesamten Bodengruppe von ca. 15.47 kg/m² auf ca. 7.07 kg/m² zu reduzieren. Bei der Verwendung dieses Bausatzes 41 als innere Stirnwand kann auf die Dekor- resp. Teppichschicht verzichtet werden.

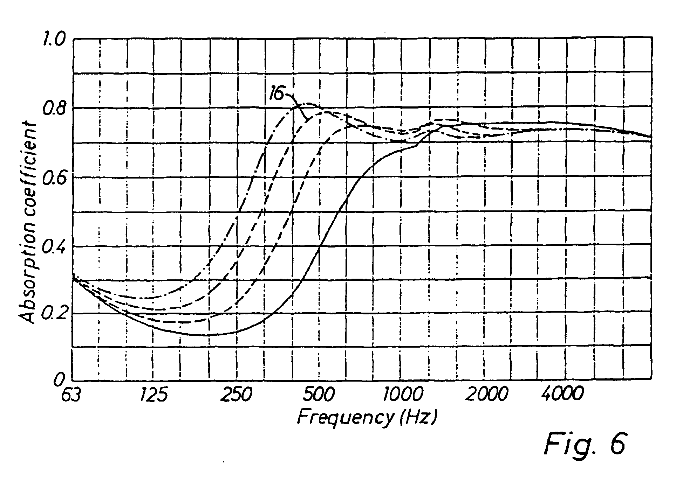

Der in Figur 6 gezeigte frequenzabhängige Verlauf 16 des Absorptionskoeffizienten macht den speziellen und Frequenzverlauf für den erfindungsgemässen Bausatz 41 mit einem ca. 1.1 mm dicken Aluminiumblech deutlich: hervorragende Schallabsorption im mittelfrequenten Bereich und konstante, nicht zu grosse Absorption von α = 0.7 bis α = 0.8 im hochfrequenten Bereich. Dies ist zur Aufrechterhaltung der Sprachverständlichkeit im Auto erforderlich.

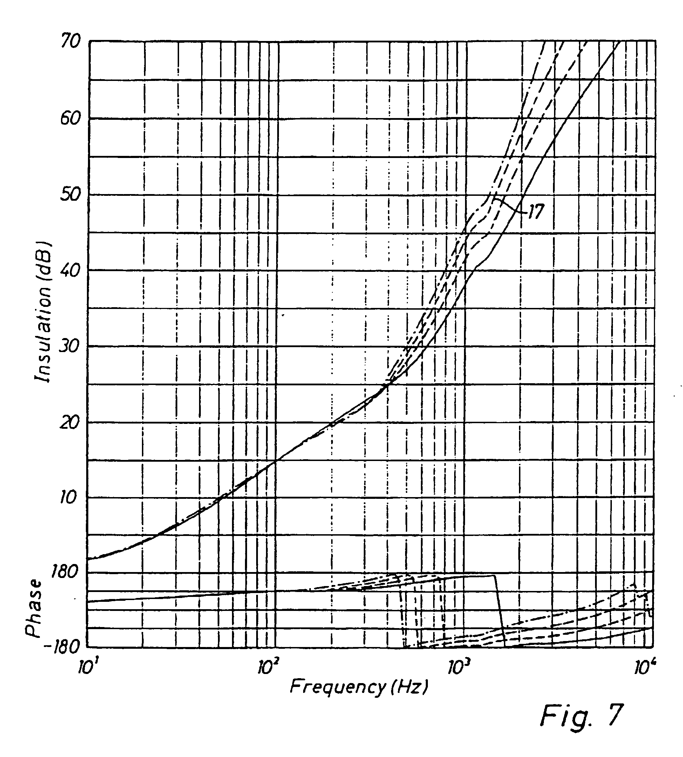

Der aus Figur 7 ersichtliche Verlauf 17 der frequenzabhängigen Isolation des erfindungsgemässen Bausatzes 41 zeigt deutlich keinen Resonanzeinbruch mehr, wie dieser bei den konventionellen Feder-Masse-Systemen im Bereich von 200 Hz zwangsläufig auftritt.

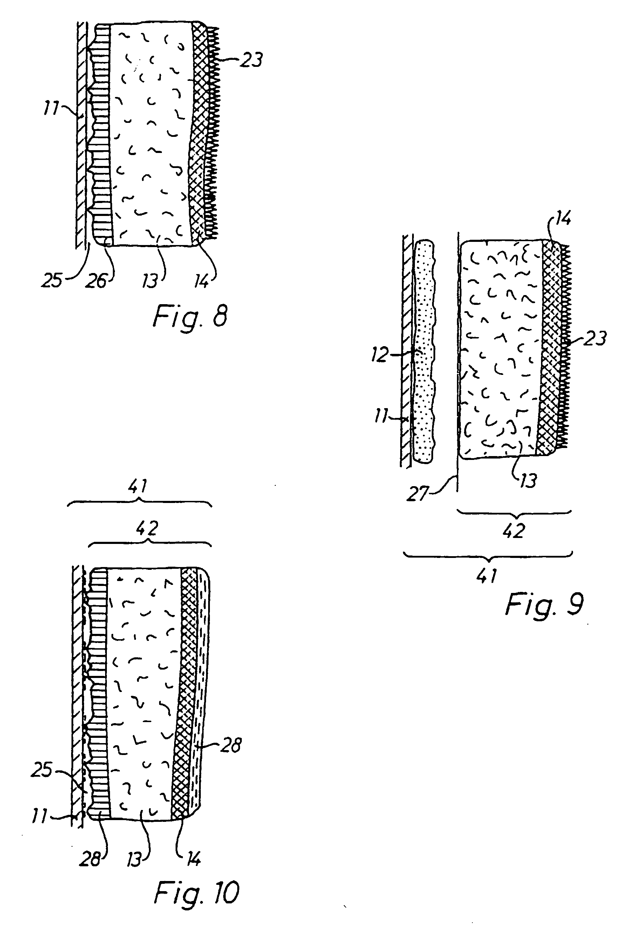

Eine weitere Anwendung des erfindungsgemässen Bausatzes 41 für die Isolation einer Dachinnenverkleidung (Dachhimmel) zeigt Figur 8. Diese umfasst eine ca. 2 mm dicke Trägerschicht 26 aus hochverpresstem Fasermaterial mit einem Flächengewicht von ca. 0.5 kg/m². Als Folgeschicht ist eine ca. 15 mm dicke Schaumschicht 13 mit einem Raumgewicht von ca. 20 kg/m³. Diese Schaum- resp. Formschaumschicht trägt erfindungsgemäss eine Versteifungsschicht 14, insbesondere eine mikroporöse Faserschicht von ca. 1.5 mm Dicke und ca. 0.4 kg/m² Flächengewicht. Eine poröse, insbesondere offenporige Weichdekorschicht 23 von ca. 2 mm Dicke resp. ca. 0.21 kg/m² Flächengewicht schliesst diese schallabsorbierende und schwingungsdämpfende, selbsttragende Dachhimmelkonstruktion ab. Dieser erfindungsgemässe multifunktionale Bausatz weist also eine Gesamtdicke von ca. 24.5 mm und ein Gesamtflächengewicht von ca. 1.56 kg/m² auf, und wirkt in derselben Weise wie das vorgängig beschriebene Ausführungsbeispiel. Weitere Ausführungsformen für den Aufbau einer erfindungsgemässen Dachinnenverkleidung sind in den Unteransprüchen 21 bis 24 näher definiert.

Es versteht sich, dass diese Dachinnenverkleidung auch mit einer Dämpfungsschicht versehen sein kann, insbesondere mit einer ca. 4 mm dicken Schaumdämpfung mit Oberflächenmuster gemäss EP 0 474 593 und einem Flächengewicht von ca. 0.15 kg/m².

In einer alternativen Ausführungsform dieser Dachinnenverkleidung kann die Trägerschicht 26 weggelassen werden und wird das Montagepaket 42 unter Bildung einer Luftschicht 25 mit dem flächigen Fahrzeugteil 11 direkt verklebt. Dadurch reduziert sich zwar die Schwingungsdämpfung des Aluminiumdaches und wird die Schallisolation, insbesondere bei Regen- oder Tunnelfahrten etwas vermindert, jedoch lässt sich damit ein immer noch genügend wirksamer, erfindungsgemässer Bausatz mit einer Dicke von ca. 18.5 mm und einem Flächengewicht von ca. 0.91 kg/m² realisieren.

Der erfindungsgemässe Bausatz 41 lässt sich auch bei Türverkleidungen einsetzen und weist in einer Ausführungsform gemäss Figur 9 eine ca. 2.4 mm dicke, mehrschichtige Dämpfungsschicht auf, welche aus einem ultraleichten bituminösen Dämpfungsmaterial und mindestens einer ca. 0.1 mm dünnen Aluminiumfolie besteht. Solche, direkt mit dem Blech verklebte mehrschichtige Dämpfungssysteme sind bekannt. Sie sind aber in der Regel mindestens 4 kg/m² schwer. Das erfindungsgemäss verwendete System besitzt ein Flächengewicht von nur noch ca. 2.67 kg/m² bei besserer Dämpfungseffizienz als herkömmliche Systeme. Danach folgt ein Luftspalt 25 variabler Dicke. Dieser kann insbesondere benutzt werden, um die Fenstermechanik aufzunehmen. Das eigentliche Montagepaket 42 ist mit einer 25µm dünnen PU-Folie 27 mit einem Flächengewicht von ca. 0.03 kg/m² gegen Feuchtigkeit und Verschmutzung geschützt. Die poröse Federschicht 13 und die mikroporöse Versteifungsschicht 14 sind nach den Merkmalen der Ansprüche 26 bis 29 ausgebildet. Diese Schichtenfolge wird fahrgastraumseitig mit einer ca. 2 mm dicken porösen Deckschicht 23, insbesondere einer offenporigen Dekorschicht, mit einem Flächengewicht von ca. 0.21 kg/m² abgeschlossen. Damit weist dieses Montagepaket ein Flächengewicht von ca. 3.51 kg/m² auf. Es versteht sich, dass dieses Montagepaket 42 nur partiell und vorzugsweise nur in den flächigen Bereichen der Tür angebracht werden kann.

Es versteht sich, dass dieser Bausatz 41 auch mit einer Dämpfungsschicht 12 zwischen dem flächigen Fahrzeugteil 11 versehen sein kann, welche Dämpfungsschicht entweder aus einem mehrschichtigen, ca. 2.3 mm dicken, ultraleichten Dämpfungsmaterial mit einem Flächengewicht von ca. 2.67 kg/m² und mit mindestens einer ca. 0.1 mm dünnen Aluminiumfolie besteht, oder aus einem mehrschichtigen, ca. 2.3 mm dicken, ultraleichten Dämpfungsmaterial mit einem Flächengewicht von ca. 2.67 kg/m² und mit mindestens einer ca. 0.1 mm dünnen Folie aus faserverstärktem Kunststoffpapier besteht. Damit beträgt das Flächengewicht der mehrschichtigen Dämpfungsschicht ca. 2.54 kg/m².

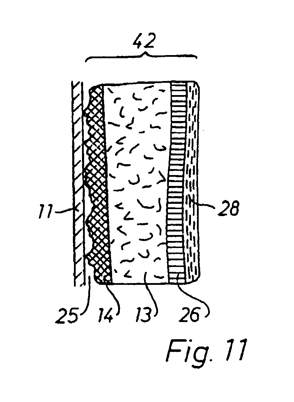

Der erfindungsgemässe Bausatz 41 lässt sich auch als äussere Stirnwandverkleidung, wie in Figuren 10 und 11 dargestellt, verwenden. Das dazu verwendete Montagepaket weist motorraumseitig eine schmutzabweisende Schutzschicht 28, insbesondere ein öl- und wasserabweisendes Schutzvlies auf. Die mikroporöse Versteifungsschicht 14 ist zwischen der Federschicht 13 und dieser Schutzschicht angeordnet, wobei die Versteifungsschicht aus einem hochverpressten Fasermaterial mit einer Dicke von ca. 2.5 mm und einem Flächengewicht von ca. 1.0 kg/m² besteht, die offenporige Federschicht des Montagepakets 42 entweder aus einem ca. 15 mm dicken Thermoformschaum mit einem Flächengewicht von ca. 0.3 kg/m², oder aus einem ca. 15 mm dicken PU-Formschaum mit einem Flächengewicht von ca. 0.6 kg/m² bis 0.9 kg/m², oder aus einem ca. 15 mm dicken duroplastischen Mischfaservlies aus wärmebeständigen Fasern und mit einem Flächengewicht con ca. 0.7 kg/m² bis 1.0 kg/m² besteht. Die motorraumseitige Schutzschicht weist eine Dicke von 0.2 bis 0.4 mm und ein Flächengewicht von 0.1 bis 0.3 kg/m² auf. Bei dieser Ausführungsform ist das Montagepaket 42 in einfacher Weise am flächigen Fahrzeugteil 11 unter Bildung einer Luftschicht 25 angeklebt.

In einer weiteren Ausführungsform dieses als äussere Stirnwandverkleidung verwendeten Montagepakets 42, liegt, wie in Figur 11 dargestellt, die mikroporöse Versteifungsschicht 14 zwischen der porösen Federschicht 13 und der Luftschicht 25. Wiederum kann die offenporige Federschicht des Montagepakets entweder aus einem Thermoformschaum, einem PU-Formschaum oder einem duroplastischen Mischfaservlies bestehen, und ist motorraumseitig eine Schutzschicht 28 vorgesehen. Dieses Montagepaket 42 kann am flächigen Fahrzeugteil 11 angeklebt oder lediglich angelegt sein. Um das Montagepaket stabil anlegen zu können, weist dieses eine Trägerschicht 26 auf. Es versteht sich, dass bei diesen Ausführungsformen zwischen dem Montagepaket 42 und der Luftschicht 25 auch eine Schaumdämpfung vorgesehen sein kann, welche eine Dicke von 3 mm und ein Flächengewicht von ca. 0.12 kg/m² aufweist.

Die Vorteile des erfindungsgemässen Bausatzes zeigen sich insbesondere bei der Verwendung von dünnem Stahlblech oder leichten Aluminium- resp. Organoblechen, wie sie die Automobilindustrie heute gerne verwendet. Ein weiterer Vorteil des erfindungsgemässen Bausatzes liegt in der äusserst niederen Wärmeleitfähigkeit der verwendeten porösen Federschicht, welche dazu führt, dass dieser Bausatz neben seiner guten akustischen Wirksamkeit auch eine gute Wärmeisolation aufweist.

## Patentansprüche

1. Multifunktionaler Bausatz (41) für die Lärmreduktion und Wärmeisolation in Fahrzeugen zur Bildung einer schallabsorbierenden, schalldämmenden, schwingungsdämpfenden und wärmeisolierenden Verkleidung, insbesondere einer Boden- oder Stirnwandisolation, Türverkleidung oder Dachinnenverkleidung, mit mindestens einem flächigen Fahrzeugteil (11) und einem lärmreduzierenden Montagepaket (42) aus mehreren Schichten, welches Montagepaket (42) mindestens eine poröse Federschicht (13), insbesondere eine offenporige Schaumschicht, umfasst und wobei zwischen diesem Montagepaket (42) und dem flächigen Fahrzeugteil eine Luftschicht (25) vorgesehen ist, **dadurch gekennzeichnet, dass** zur Bildung eines ultraleichten Bausatzes (41), welcher geeignet ist, Schalldämmung, Schallabsorption und Schwingungsdämpfung optimal zu kombinieren, das mehrschichtige Montagepaket (42) ein schwerschichtfreies Montagepaket ist und eine mikroporöse Versteifungsschicht (14), insbesondere eine offenporige Faserschicht oder Faser-/Schaum-Verbundschicht, umfasst, welche einen totalen Luftströmungswiderstand von Rₜ=500Nsm⁻³ bis Rₜ=2500Nsm⁻³, insbesondere von Rₜ=900Nsm⁻³ bis Rₜ=2000Nsm⁻³, und eine Flächenmasse von m_{F}=0.3kg/m² bis m_{F}=2.0kg/m², insbesondere von m_{F}=0.5kg/m² bis m_{F}=1.6kg/m² aufweist.

2. Bausatz nach Anspruch 1, **dadurch gekennzeichnet, dass** die mikroporöse Versteifungsschicht (14) eine Biegesteifigkeit von B=0.005Nm bis B=10.5Nm, insbesondere von B=0.025Nm bis B=6.0Nm aufweist.

3. Bausatz nach einem der Ansprüche 1 oder 2, **dadurch gekennzeichnet, dass** das Montagepaket (42) mit einer porösen Deckschicht (15), insbesondere einer Weichdekor- oder Teppichschicht, oder einem schmutzabweisenden Schutzvlies versehen ist.

4. Bausatz nach einem der Ansprüche 1 bis 3, **dadurch gekennzeichnet, dass** die poröse Federschicht zwischen der Luftschicht (25) und der mikroporöse Versteifungsschicht angeordnet ist.

5. Bausatz nach einem der Ansprüche 1 bis 4, **dadurch gekennzeichnet, dass** die poröse Federschicht (13) aus einem Thermoformschaum mit einer geringen Dichte von ρ≤30kg/m³, insbesondere von ρ≤15kg/m³ besteht.

6. Bausatz nach einem der Ansprüche 1 bis 4, **dadurch gekennzeichnet, dass** die poröse Federschicht (13) aus einem PU-Formschaum geringer Dichte von ρ≤70kg/m³, insbesondere von ρ≤45kg/m³ besteht.

7. Bausatz nach einem der Ansprüche 1 bis 4, **dadurch gekennzeichnet, dass** die poröse Federschicht (13) aus einem thermoplastischen Mischfaservlies geringer Dichte von ρ≤70kg/m³, insbesondere ρ≤35kg/m³ besteht.

8. Bausatz nach einem der Ansprüche 1 bis 4, **dadurch gekennzeichnet, dass** die poröse Federschicht (13) aus einem duroplastischen Faservlies geringer Dichte von ρ≤70kg/m³, insbesondere ρ≤50kg/m³ besteht.

9. Bausatz nach einem der Ansprüche 5 bis 8, **dadurch gekennzeichnet, dass** zwischen dem Montagepaket (42) und dem flächigen Fahrzeugteil (11) mindestens partiell eine Dämpfungsschicht (12) angeordnet ist.

10. Bausatz nach Anspruch 9, **dadurch gekennzeichnet, dass** die Dämpfungsschicht (12) eine Dicke von ca. 2.2 mm aufweist und aus einem ultraleichten Dämpfungsmaterial mit einem Flächengewicht von ca. 2.4 kg/m² besteht, wobei diese Dämpfungsschicht auf das flächige Fahrzeugteil aufgeklebt ist und die durch eine reliefartige Abstützung des Montagepakets (42) gebildete Luftschicht (25) zwischen dem Montagepaket und der Dämpfungsschicht, eine Dicke von ca. 0.2 mm aufweist, die poröse Federschicht (13) eine Dicke von ca. 25 mm und ein Flächengewicht von ca. 0.4 kg/m² bis ca. 1.75 kg/m² aufweist, die mikroporöse Versteifungsschicht (14) eine Dicke von 1.5 mm bis 5.0 mm und ein Flächengewicht von 0.6 kg/m² bis 1.6 kg/m² aufweist.

11. Bausatz nach Anspruch 9, **dadurch gekennzeichnet, dass** die Dämpfungsschicht aus einem mehrschichtigen, mindestens eine ca. 0.2 mm dünne Aluminiumfolie umfassenden, ultraleichten Dämpfungsmaterial mit einem Flächengewicht von ca. 2.94 kg/m² besteht, wobei diese Dämpfungsschicht auf das flächige Fahrzeugteil aufgeklebt ist und die durch eine reliefartige Abstützung des Montagepakets (42) gebildete Luftschicht (25) zwischen dem Montagepaket und der Dämpfungsschicht, eine Dicke von ca. 0.2 mm aufweist, dass die poröse Federschicht eine Dicke von ca. 25 mm und ein Flächengewicht von 0.4 kg/m² bis 1.75 kg/m² aufweist, dass die mikroporöse Versteifungsschicht eine Dicke von 1.5 mm bis 5.0 mm und ein Flächengewicht von 0.6 kg/m² bis 1.6 kg/m² aufweist.

12. Bausatz nach Anspruch 9, **dadurch gekennzeichnet, dass** die Dämpfungsschicht aus einem mehrschichtigen, mindestens ein ca. 0.2 mm dünnes faserverstärktes Kunststoffpapier umfassenden, ultraleichten Dämpfungsmaterial mit einem Flächengewicht von ca. 2.67 kg/m² besteht, wobei diese Dämpfungsschicht auf das flächige Fahrzeugteil aufgeklebt ist und die durch eine reliefartige Abstützung des Montagepakets (42) gebildete Luftschicht (25) zwischen diesem Montagepaket und der Dämpfungsschicht, eine Dicke von ca. 0.2 mm aufweist, dass die poröse Federschicht eine Dicke von ca. 25 mm und ein Flächengewicht von 0.4 kg/m² bis 1.75 kg/m² aufweist, dass die mikroporöse Versteifungsschicht eine Dicke von 1.5 mm bis 5.0 mm und ein Flächengewicht von 0.6 kg/m² bis 1.6 kg/m² aufweist.

13. Bausatz nach Anspruch 9, **dadurch gekennzeichnet, dass** die Dämpfungsschicht eine Dicke von ca. 2.0 mm aufweist und aus einem ultraleichten, insbesondere bitumenfreien EPDM-Dämpfungsmaterial mit einem Flächengewicht von ca. 2.4 kg/m² und einer reliefartig strukturierten Oberfläche besteht, wobei diese Dämpfungsschicht einerseits mit dieser reliefartig strukturierten Oberfläche auf dem flächigen Fahrzeugteil aufliegt, sodass die zwischen der reliefartig strukturierten Dämpfungsschicht und dem flächigen Fahrzeugteil gebildete Luftschicht (25) mindestens bereichsweise eine Dicke von ca. 0.2 mm aufweist und andererseits an der offenporigen Federschicht (13) befestigt ist, dass die poröse Federschicht eine Dicke von ca. 25 mm und ein Flächengewicht von ca. 0.4 kg/m² bis ca. 1.75 kg/m² aufweist und dass die mikroporöse Versteifungsschicht eine Dicke von 1.5 mm bis 5.0 mm und ein Flächengewicht von 0.6 kg/m² bis 1.6 kg/m² aufweist.

14. Bausatz nach Anspruch 9, **dadurch gekennzeichnet, dass** die Dämpfungsschicht aus einer ca. 4 mm dünnen Formschaumschicht mit einem effektiven Raumgewicht von ca. 40 kg/m³, resp. einem Flächengewicht von ca. 0.2 kg/m² und einer reliefartig strukturierten Oberfläche besteht, wobei diese Dämpfungsschicht einerseits mit dieser reliefartig strukturierten Oberfläche auf dem flächigen Fahrzeugteil aufliegt ist, sodass die zwischen der reliefartig strukturierten Dämpfungsschicht und dem flächigen Fahrzeugteil gebildete Luftschicht (25) mindestens bereichsweise eine Dicke von ca. 0.2 mm aufweist und andererseits an der offenporigen Federschicht befestigt ist, dass die poröse Federschicht eine Dicke von ca. 25 mm und ein Flächengewicht von 0.4 kg/m² bis 1.75 kg/m² aufweist und dass die mikroporöse Versteifungsschicht eine Dicke von 1.5 mm bis 5.0 mm und ein Flächengewicht von 0.6 kg/m² bis 1.6 kg/m² aufweist.

15. Bausatz nach einem der Ansprüche 5 bis 8 und 10 bis 14, **dadurch gekennzeichnet, dass** zur Bodenisolation das Montagepaket (42) eine Dekorschicht von ca. 5 mm Dicke und einem Flächengewicht von 0.4 kg/m² bis 1.0 kg/m² aufweist.

16. Bausatz nach einem der Ansprüche 5 bis 8 und 10 bis 14, **dadurch gekennzeichnet, dass** zur inneren Stirnwandverkleidung das Montagepaket (42) höchstens partiell eine Dekorschicht von ca. 5 mm Dicke und einem Flächengewicht von 0.4 kg/m² bis 1.0 kg/m² aufweist.

17. Bausatz nach einem der Ansprüche 1 bis 4, **dadurch gekennzeichnet, dass** zur Dachinnenverkleidung das Montagepaket (42) eine reliefartig strukturierte Oberfläche aufweist, die unter Bildung einer Luftschicht (25) an dem flächigen Fahrzeugteil angeklebt ist und die poröse Federschicht aus einer steifen Thermoformschaumschicht mit einem Kompressionsmodul von über 120'000 Pa, einer Dicke von ca. 13 mm bis 17 mm und einem Flächengewicht von 0.2 kg/m² bis 0.4 kg/m² besteht, und die mikroporöse Versteifungsschicht eine Dicke von 1.5 mm bis 2.0 mm und ein Flächengewicht von 0.4 kg/m² bis 0.6 kg/m² aufweist, wobei die poröse Dekorschicht eine Dicke von ca. 2 mm und ein Flächengewicht von ca. 0.21 kg/m² aufweist.

18. Bausatz nach einem der Ansprüche 1 bis 4, **dadurch gekennzeichnet, dass** zur Dachinnenverkleidung das Montagepaket (42) eine reliefartig strukturierte Oberfläche aufweist, die unter Bildung einer Luftschicht (25) am flächigen Fahrzeugteil angeklebt ist und die poröse Federschicht aus einer offenporigen, weichen PU-Formschaumschicht mit einem Kompressionsmodul von weniger als 60 kPa, einer Dicke von ca. 20 mm und einem Flächengewicht von ca. 0.8 kg/m² besteht, und die mikroporöse Versteifungsschicht eine Dicke von 1.5 mm bis 2.0 mm und ein Flächengewicht von 0.4 kg/m² bis 0.6 kg/m² aufweist, wobei die Dekorschicht porös ist und eine Dicke von ca. 2 mm und ein Flächengewicht von ca. 0.21 kg/m² aufweist.

19. Bausatz nach einem der Ansprüche 1 bis 4, **dadurch gekennzeichnet, dass** zur Dachinnenverkleidung das Montagepaket (42) eine reliefartig strukturierte Oberfläche aufweist, die und unter Bildung einer Luftschicht (25) am flächigen Fahrzeugteil angeklebt ist und die poröse Federschicht aus einem thermoplastischen Mischfaservlies mit einer Dichte von weniger als 35 kg/m³, einer Dicke von ca. 20 mm und einem Flächengewicht von ca. 0.7 kg/m² besteht, und die steife, mikroporöse Versteifungsschicht eine Dicke von 1.5 mm bis 2.0 mm und ein Flächengewicht von 0.4 kg/m² bis 0.6 kg/m² aufweist, wobei die Dekorschicht porös ist und eine Dicke von ca. 2 mm und ein Flächengewicht von ca. 0.21 kg/m² aufweist.

20. Bausatz nach einem der Ansprüche 1 bis 4, **dadurch gekennzeichnet, dass** zur Dachinnenverkleidung das Montagepaket (42) eine reliefartig strukturierte Oberfläche aufweist, die unter Bildung einer Luftschicht (25) am flächigen Fahrzeugteil angeklebt ist und die poröse Federschicht aus einem duroplastischen Mischfaservlies mit einer Dichte von weniger als 50 kg/m³, einer Dicke von ca. 20 mm und einem Flächengewicht von ca. 1.0 kg/m² besteht, und die mikroporöse Versteifungsschicht eine Dicke von 1.5 mm bis 2.0 mm und ein Flächengewicht von 0.4 kg/m² bis 0.6 kg/m² aufweist, wobei die Dekorschicht porös ist und eine Dicke von ca. 2 mm und ein Flächengewicht von ca. 0.21 kg/m² aufweist.

21. Bausatz nach einem der Ansprüche 1 bis 4, **dadurch gekennzeichnet, dass** zur Dachinnenverkleidung das Montagepaket (42) eine reliefartig strukturierte Oberfläche aufweist, die unter Bildung einer Luftschicht (25) an dem flächigen Fahrzeugteil anliegt, welches Montagepaket zusätzlich eine offenporige, steife Trägerschicht (26), insbesondere aus einem hochverpressten, mikroporösen Fasermaterial oder einem bienenwabenartig aufgebautem Trägermaterial, von ca. 3 bis 5 mm Dicke und einem Flächengewicht von 0.4 bis 0.6 kg/m² aufweist, und die poröse Federschicht aus einer steifen Thermoformschaumschicht mit einem Kompressionsmodul von über 120'000 Pa, einer Dicke von ca. 13 mm bis 17 mm und einem Flächengewicht von 0.2 kg/m² bis 0.4 kg/m² besteht, und die mikroporöse Versteifungsschicht eine Dicke von 1.5 mm bis 2.0 mm und ein Flächengewicht von 0.4 kg/m² bis 0.6 kg/m² aufweist, wobei die poröse Dekorschicht eine Dicke von ca. 2 mm und ein Flächengewicht von ca. 0.21 kg/m² aufweist.

22. Bausatz nach einem der Ansprüche 1 bis 4, **dadurch gekennzeichnet, dass** zur Dachinnenverkleidung das Montagepaket (42) eine reliefartig strukturierte Oberfläche aufweist, die unter Bildung einer Luftschicht (25) an dem flächigen Fahrzeugteil anliegt, und zusätzlich eine offenporige, steife Trägerschicht (26), insbesondere aus einem hochverpressten, mikroporösen Fasermaterial oder einem bienenwabenartig aufgebautem Trägermaterial, von ca. 3 bis 5 mm Dicke und einem Flächengewicht von 0.4 bis 0.6 kg/m² aufweist, die poröse Federschicht aus einer offenporigen, weichen PU-Formschaumschicht mit einem Kompressionsmodul von weniger als 60 kPa, einer Dicke von ca. 20 mm und einem Flächengewicht von ca. 0.8 kg/m² besteht, und die mikroporöse Versteifungsschicht eine Dicke von 1.5 mm bis 2.0 mm und ein Flächengewicht von 0.4 kg/m² bis 0.6 kg/m² aufweist, wobei die Dekorschicht porös ist und eine Dicke von ca. 2 mm und ein Flächengewicht von ca. 0.21 kg/m² aufweist.

23. Bausatz nach einem der Ansprüche 1 bis 4, **dadurch gekennzeichnet, dass** zur Dachinnenverkleidung das Montagepaket (42) eine reliefartig strukturierte Oberfläche aufweist, die unter Bildung einer Luftschicht (25) an dem flächigen Fahrzeugteil anliegt, und zusätzlich eine offenporige, steife Trägerschicht (26), insbesondere aus einem hochverpressten, mikroporösen Fasermaterial oder einem bienenwabenartig aufgebautem Trägermaterial, von ca. 3 bis 5 mm Dicke und einem Flächengewicht von 0.4 bis 0.6 kg/m² aufweist, und die poröse Federschicht aus einem thermoplastischen Mischfaservlies mit einer Dichte von weniger als 35 kg/m³, einer Dicke von ca. 20 mm und einem Flächengewicht von ca. 0.7 kg/m² besteht, und die mikroporöse Versteifungsschicht eine Dicke von 1.5 mm bis 2.0 mm und ein Flächengewicht von 0.4 kg/m² bis 0.6 kg/m² aufweist, wobei die Dekorschicht porös ist und eine Dicke von ca. 2 mm und ein Flächengewicht von ca. 0.21 kg/m² aufweist.

24. Bausatz nach einem der Ansprüche 1 bis 4, **dadurch gekennzeichnet, dass** zur Dachinnenverkleidung das Montagepaket (42) eine reliefartig strukturierte Oberfläche aufweist, die unter Bildung einer Luftschicht (25) am flächigen Fahrzeugteil anliegt, und zusätzlich eine offenporige, steife Trägerschicht (26), insbesondere aus einem hochverpressten, mikroporösen Fasermaterial oder einem bienenwabenartig aufgebautem Trägermaterial, von ca. 3 bis 5 mm Dicke und einem Flächengewicht von 0.4 bis 0.6 kg/m² aufweist, die poröse Federschicht aus einem duroplastischen Mischfaservlies mit einer Dichte von weniger als 50 kg/m³, einer Dicke von ca. 20 mm und einem Flächengewicht von ca. 1.0 kg/m² besteht, und die mikroporöse Versteifungsschicht eine Dicke von 1.5 mm bis 2.0 mm und ein Flächengewicht von 0.4 kg/m² bis 0.6 kg/m² aufweist, wobei die Dekorschicht porös ist und eine Dicke von ca. 2 mm und ein Flächengewicht von ca. 0.21 kg/m² aufweist.

25. Bausatz nach einem der Ansprüche 21 bis 24, **dadurch gekennzeichnet, dass** zur Dachinnenverkleidung zwischen dem Montagepaket (42) und dem flächigen Fahrzeugteil mindestens partiell eine Dämpfungsschicht angeordnet ist, welche aus einem Formschaum mit einer Dicke von ca. 4 mm und einem Flächengewicht von ca. 0.2 kg/m² besteht.

26. Bausatz nach einem der Ansprüche 1 bis 4, **dadurch gekennzeichnet, dass** zur Türverkleidung eine ca. 25 Um dünne PU-Folie mit ca. 0.03 kg/m² Flächengewicht zwischen der Luftschicht (25) und dem Montagepaket (42) vorgesehen ist, die poröse Federschicht des Montagepakets aus einem ca. 15 mm dicken Thermoformschaum mit einem Flächengewicht von ca. 0.3 kg/m² besteht, die mikroporöse Versteifungsschicht eine Dicke von ca. 1 mm bis 1.5 mm und ein Flächengewicht von ca. 0.5 kg/m² aufweist, und die poröse, insbesondere offenporige Dekorschicht ein Flächengewicht von ca. 0.21 kg/m² und eine Dicke von ca. 2 mm aufweist.

27. Bausatz nach einem der Ansprüche 1 bis 4, **dadurch gekennzeichnet, dass** zur Türverkleidung eine ca. 25 µm dünne PU-Folie mit ca. 0.03 kg/m² Flächengewicht zwischen der Luftschicht (25) und dem Montagepaket (42) vorgesehen ist, die poröse Federschicht des Montagepakets aus einem ca. 15 mm dicken PU-Formschaumschicht mit einem Flächengewicht von 0.6 kg/m² bis 0.9 kg/m² besteht, die mikroporöse Versteifungsschicht eine Dicke von 1 mm bis 1.5 mm und ein Flächengewicht von ca. 0.5 kg/m² aufweist, und die poröse, insbesondere offenporige Dekorschicht ein Flächengewicht von ca. 0.21 kg/m² und eine Dicke von ca. 2 mm aufweist.

28. Bausatz nach einem der Ansprüche 1 bis 4, **dadurch gekennzeichnet, dass** zur Türverkleidung eine ca. 25 µm dünne PU-Folie mit ca. 0.03 kg/m² Flächengewicht zwischen der Luftschicht (25) und dem Montagepaket (42) vorgesehen ist, die poröse Federschicht des Montagepakets aus einem ca. 15 mm dicken thermoplastischen Mischfaservlies mit einer Dichte von weniger als ca. 35 kg/m³ und einem Flächengewicht von ca. 0.5 kg/m² besteht, die mikroporöse Versteifungsschicht eine Dicke von 1 mm bis 1.5 mm und ein Flächengewicht von ca. 0.5 kg/m² aufweist, und die poröse, insbesondere offenporige Dekorschicht ein Flächengewicht von ca. 0.21 kg/m² und eine Dicke von ca. 2 mm aufweist.

29. Bausatz nach einem der Ansprüche 1 bis 4, **dadurch gekennzeichnet, dass** zur Türverkleidung eine ca. 25 µm dünne PU-Folie mit ca. 0.03 kg/m² Flächengewicht zwischen der Luftschicht (25) und dem Montagepaket (42) vorgesehen ist, die poröse Federschicht des Montagepakets aus einem ca. 15 mm dicken duroplastischen Mischfaservlies mit einer Dichte von weniger als ca. 50 kg/m³ und einem Flächengewicht von ca. 0.75 kg/m² besteht, die mikroporöse Versteifungsschicht eine Dicke von 1 mm bis 1.5 mm und ein Flächengewicht von ca. 0.5 kg/m² aufweist, und die poröse, insbesondere offenporige Dekorschicht ein Flächengewicht von ca. 0.21 kg/m² und eine Dicke von ca. 2 mm aufweist.

30. Bausatz nach einem der Ansprüche 26 bis 29, **dadurch gekennzeichnet, dass** das flächige Fahrzeugteil mindestens partiell mit einer Dämpfungsschicht versehen ist, welche aus einem mehrschichtigen, ca. 2.3 mm dicken, ultraleichten Dämpfungsmaterial mit einem Flächengewicht von ca. 2.67 kg/m² und mit mindestens einer ca. 0.1 mm dünnen Aluminiumfolie besteht.

31. Bausatz nach einem der Ansprüche 26 bis 29, **dadurch gekennzeichnet, dass** das flächige Fahrzeugteil mindestens partiell mit einer Dämpfungsschicht versehen ist, welche aus einem mehrschichtigen, ca. 2.3 mm dicken, ultraleichten Dämpfungsmaterial mit einem Flächengewicht von ca. 2.67 kg/m² und mit mindestens einer ca. 0.1 mm dünnen Folie aus faserverstärktem Kunststoffpapier besteht, womit das Flächengewicht der mehrschichtigen Dämpfungsschicht ca. 2.54 kg/m² beträgt.

32. Bausatz nach Anspruch 3, **dadurch gekennzeichnet, dass** zur motorraumseitigen Stirnwandverkleidung das Montagepaket (42) motorraumseitig mit einer schmutzabweisenden Schutzschicht, insbesondere einem öl- und wasserabweisenden Schutzvlies versehen ist, die mikroporöse Versteifungsschicht zwischen der Federschicht und dieser Schutzschicht angeordnet ist, wobei die Versteifungsschicht aus einem hochverpressten Fasermaterial mit einer Dicke von ca. 2.5 mm und einem Flächengewicht von ca. 1.0 kg/m² besteht, die offenporige Federschicht des Montagepakets (42) aus einem ca. 15 mm dicken Thermoformschaum mit einem Flächengewicht von ca. 0.3 kg/m² besteht, und die motorraumseitige Schutzschicht eine Dicke von 0.2 bis 0.4 mm und ein Flächengewicht von 0.1 bis 0.3 kg/m² aufweist.

33. Bausatz nach Anspruch 3, **dadurch gekennzeichnet, dass** zur motorraumseitigen Stirnwandverkleidung das Montagepaket (42) motorraumseitig mit einer schmutzabweisenden Schutzschicht, insbesondere einem öl- und wasserabweisenden Schutzvlies versehen ist, die mikroporöse Versteifungsschicht zwischen der Federschicht und dieser Schutzschicht angeordnet ist, wobei die Versteifungsschicht aus einem hochverpressten Fasermaterial mit einer Dicke von ca. 2.5 mm und einem Flächengewicht von ca. 1.0 kg/m² besteht, die offenporige Federschicht des Montagepakets (42) aus einem ca. 15 mm dicken PU-Formschaum mit einem Flächengewicht von ca. 0.6 kg/m² bis 0.9 kg/m² besteht, und die motorraumseitige Schutzschicht eine Dicke von 0.2 bis 0.4 mm und ein Flächengewicht von 0.1 bis 0.3 kg/m² aufweist.

34. Bausatz nach Anspruch 3, **dadurch gekennzeichnet, dass** zur motorraumseitigen Stirnwandverkleidung das Montagepaket (42) motorraumseitig mit einer schmutzabweisenden Schutzschicht, insbesondere einem öl- und wasserabweisenden Schutzvlies versehen ist, die mikroporöse Versteifungsschicht zwischen der Federschicht und dieser Schutzschicht angeordnet ist, wobei die Versteifungsschicht aus einem hochverpressten Fasermaterial mit einer Dicke von ca. 2.5 mm und einem Flächengewicht von ca. 1.0 kg/m² besteht, die offenporige Federschicht des Montagepakets (42) aus einem ca. 15 mm dicken duroplastischen Mischfaservlies aus wärmebeständigen Fasern und mit einem Flächengewicht von ca. 0.7 kg/m² bis 1.0 kg/m² besteht, und die motorraumseitige Schutzschicht eine Dicke von 0.2 bis 0.4 mm und ein Flächengewicht von 0.1 bis 0.3 kg/m² aufweist.

35. Bausatz nach einem der Ansprüche 32 bis 34, **dadurch gekennzeichnet, dass** zwischen der Luftschicht (25) und dem Montagepaket (42) ein schmutzabweisendes Schutzvlies vorgesehen ist, welches ein Flächengewicht von 0.05 kg/m² bis 0.15 kg/m² aufweist und insbesondere ein öl- und wasserabweisendes Schutzvlies ist.

36. Bausatz nach Anspruch 3, **dadurch gekennzeichnet, dass** die mikroporöse Versteifungsschicht zwischen der porösen Federschicht (13) und der Luftschicht (25) angeordnet ist.

37. Bausatz nach Anspruch 36, **dadurch gekennzeichnet, dass** zur motorraumseitigen Stirnwandverkleidung die Versteifungsschicht aus einem hochverpressten Fasermaterial mit einer Dicke von ca. 2.5 mm und einem Flächengewicht von ca. 1.0 kg/m² besteht, die offenporige Federschicht des Montagepakets (42) aus einem ca. 15 mm dicken Thermoformschaum mit einem Flächengewicht von ca. 0.3 kg/m² besteht, und motorraumseitig eine schmutzabweisende Schutzschicht, insbesondere ein wasser- und ölabweisendes Faservlies mit einer Dicke von 0.2 bis 0.4 mm und einem Flächengewicht von 0.1 bis 0.3 kg/m² vorgesehen ist.

38. Bausatz nach Anspruch 36, **dadurch gekennzeichnet, dass** zur motorraumseitigen Stirnwandverkleidung die Versteifungsschicht aus einem hochverpressten Fasermaterial mit einer Dicke von ca. 2.5 mm und einem Flächengewicht von ca. 1.0 kg/m² besteht, die offenporige Federschicht des Montagepakets (42) aus einem ca. 15 mm dicken PU-Formschaum mit einem Flächengewicht von 0.6 kg/m² bis 0.9 kg/m² besteht, und motorraumseitig eine schmutzabweisende Schutzschicht, insbesondere ein wasser- und ölabweisendes Faservlies mit einer Dicke von 0.2 bis 0.4 mm und einem Flächengewicht von 0.1 bis 0.3 kg/m² vorgesehen ist.

39. Bausatz nach Anspruch 36, **dadurch gekennzeichnet, dass** zur motorraumseitigen Stirnwandverkleidung die Versteifungsschicht aus einem hochverpressten Fasermaterial mit einer Dicke von ca. 2.5 mm und einem Flächengewicht von ca. 1.0 kg/m² besteht, die offenporige Federschicht des Montagepakets (42) aus einem ca. 15 mm dicken duroplastischen Mischfaservlies aus wärmebeständigen Fasern und mit einem Flächengewicht von 0.7 kg/m² bis 1.0 kg/m² besteht, und motorraumseitig eine schmutzabweisende Schutzschicht, insbesondere ein wasser- und ölabweisendes Faservlies mit einer Dicke von 0.2 bis 0.4 mm und einem Flächengewicht von 0.1 bis 0.3 kg/m² vorgesehen ist.

40. Bausatz nach einem der Ansprüche 32 bis 34, 37 bis 39, **dadurch gekennzeichnet, dass** zwischen der Luftschicht (25) und dem Montagepaket (42) eine Schaumdämpfung vorgesehen ist, welche eine Dicke von 3.0 mm und ein Flächengewicht von ca. 0.12 kg/m² aufweist.

41. Bausatz nach einem der Ansprüche 1 bis 40, **dadurch gekennzeichnet, dass** das flächige Fahrzeugteil ein ca. 0.8 mm dickes Stahlblech ist.

42. Bausatz nach einem der Ansprüche 1 bis 40, **dadurch gekennzeichnet, dass** das flächige Fahrzeugteil ein ca. 1.1 mm dickes Aluminiumblech ist.

43. Bausatz nach einem der Ansprüche 1 bis 40, **dadurch gekennzeichnet, dass** das flächige Fahrzeugteil ein ca. 1.5 mm dickes, faserverstärktes Kunststoffteil, insbesondere ein Organoblech, ist.

44. Bausatz nach einem der Ansprüche 1 bis 43, **dadurch gekennzeichnet, dass** die poröse Federschicht eine Wärmeleitfähigkeit λ von weniger als 0.05 W/mK, vorzugsweise 0.04 W/mK aufweist.

45. Montagepaket für einen Bausatz nach einem der Ansprüche 1 bis 44, **dadurch gekennzeichnet, dass** dieses ein schwerschichtfreies Montagepaket (42) aus mehreren Schichten ist, welches Montagepaket (42) mindestens eine poröse Feder- schicht (13), insbesondere eine offenporige Schaumschicht, umfasst und eine mikroporöse Versieffungsschicht (14), insbesondere eine offenporige Faserschicht oder Faser-/Schaum-Verbundschicht, umfasst, welche einen totalen Luftströrnungswiderstand von Rₜ=500Nsm⁻³ bis Rₜ=2500Nsm⁻³, insbesondere von Rₜ=900Nsm⁻³ bis Rₜ=2000Nsm⁻³, und eine Flächenmasse von m_{F}=0.3kg/m² bis m_{F}=2.0kg/m², insbesondere von m_{F}=0.5kg/m² bis m_{F}=1.6kg/m² aufweist.

46. Montagepaket nach Anspruch 45, **dadurch gekennzeichnet, dass** die mikroporöse Versteifungsschicht (14) eine Biegesteifigkeit von B=0.005Nm bis B=10.5Nm, insbesondere von B=0.025Nm bis B=6.0Nm aufweist.

47. Montagepaket nach einem der Ansprüche 45 oder 46, **dadurch gekennzeichnet, dass** dieses mit einer Dämpfungsschicht und/oder Klebeschicht versehen ist.

## Claims

1. A multi-functional kit (41) for noise reduction and heat insulation in vehicles, for forming a sound-absorbing, sound-insulating, oscillation-damping and heat-insulating covering, in particular a floor insulation or end wall insulation, door covering, or roof inner covering, with at least one areal vehicle part (11) and a noise-reducing assembly package (42) of several layers, the assembly package comprising at least one porous spring layer (13), in particular an open-pored foam layer, and wherein between this assembly package (42) and the areal vehicle part there is provided an air layer (25), **characterized in that** for forming an ultra-light kit (41) which is suitable for optimally combining sound insulation, sound absorption and oscillation damping, the multi-layered assembly package (42) is a heavy-layer-free assembly package and comprises a microporous stiffening layer (14), in particular an open-pored fiber layer or fiber/foam composite layer having a total airflow resistance of Rₜ=500Nsm⁻³ to Rₜ=2500Nsm⁻³, in particular from Rₜ=900Nsm⁻³ to Rₜ=2000Nsm⁻³, and an areal-mass of m_{F}=0.3kg/m² to m_{F}=2.0kg/m², in particular of m_{F}=0.5kg/m² to m_{F}=1.6kg/m².

2. A kit according to claim 1, **characterized in that** the microporous stiffening layer (14) has a bending stiffness of B=0.005Nm to B=10.5Nm, in particular from B=0.025Nm to B=6.0Nm.

3. A kit according to one of the claims 1 or 2, **characterized in that** the assembly package (42) is provided with a porous cover layer (15), in particular a soft decor layer or carpet layer, or with a dirt-resistant protective fleece.

4. A kit according to one of the claims 1 to 3, **characterized in that** the porous spring layer is disposed between the air layer (25) and the microporous stiffening layer.

5. A kit according to one of the claims 1 to 4, **characterized in that** the porous spring layer (13) comprises a thermomoulded foam having a low density of ρ≤30kg/m³, in particular of ρ≤15kg/m³.

6. A kit according to one of the claims 1 to 4, **characterized in that** the porous spring layer (13) comprises a PU moulded foam having a low density of ρ≤70kg/m³, in particular of ρ≤45kg/m³.

7. A kit according to one of the claims 1 to 4, **characterized in that** the porous spring layer (13) comprises a thermoplastic mixed fiber fleece having a low density of ρ≤70kg/m³, in particular of ρ≤35kg/m³.

8. A kit according to one of the claims 1 to 4, **characterized in that** the porous spring layer (13) comprises a duroplastic fiber fleece having a low density of ρ≤70kg/m³, in particular of ρ≤50kg/m³.

9. A kit according to one of the claims 5 to 8, **characterized in that** between the assembly package (42) and the areal vehicle part (11) at least partially there is arranged a damping layer (12).

10. A kit according to claim 9, **characterized in that** the damping layer (12) has a thickness of approx. 2.2 mm and comprises an ultra-light damping material having an area-weight of approx. 2.4 kg/m², wherein this damping layer is adhesed onto the areal vehicle part, and the air layer (25), formed between the assembly package and the damping layer by a relief-like support of the assembly package (42) has a thickness of approx. 0.2 mm, the porous spring layer (13) has a thickness of approx. 25 mm and surface weight of approx. 0.4 kg/m² to approx. 1.75 kg/m², and the microporous stiffening layer (14) has a thickness of 1.5 mm to 5.0 mm and an area-weight of 0.6 kg/m² to 1.6 kg/m².

11. A kit according to claim 9, **characterized in that** the damping layer comprises a multi-layered, ultra-light damping material comprising at least an approx. 0.2 mm thin aluminium foil and having an area-weight of approx. 2.94 kg/m², wherein this damping layer is adhesed onto the areal vehicle part, and the air layer (25), formed between the assembly package and the damping layer by a relief-like support of the assembly package (42), has a thickness of approx. 0.2 mm, that the porous spring layer (13) has a thickness of approx. 25 mm and a surface weight of approx. 0.4 kg/m² to approx. 1.75 kg/m², that the microporous stiffening layer (14) has a thickness of 1.5 mm to 5.0 mm and an area-weight of 0.6 kg/m² to 1.6 kg/m²

12. A kit according to claim 9, **characterized in that** the damping layer comprises a multi-layered, ultra-light damping material comprising at least an approx. 0.2 mm thin fiber-reinforced plastic paper and having an area-weight of approx. 2.67 kg/m², wherein this damping layer is adhesed onto the areal vehicle part, and the air layer (25), formed between the assembly package and the damping layer by a relief-like support of the assembly package (42), has a thickness of approx. 0.2 mm, that the porous spring layer (13) has a thickness of approx. 25 mm and surface weight of approx. 0.4 kg/m² to approx. 1.75 kg/m², that the microporous stiffening layer (14) has a thickness of 1.5 mm to 5.0 mm and an area-weight of 0.6 kg/m² to 1.6 kg/m².

13. A kit according to claim 9, **characterized in that** the damping layer has a thickness of approx. 2.0 mm and comprises an ultra-light, in particular bitumen-free EPDM damping material having an area-weight of approx. 2.4 kg/m² and a relief-like structured surface, wherein this damping layer on the one side lies with this relief-like structured surface on the areal vehicle part, so that the air layer (25) formed between the relief-like structured damping layer and the areal vehicle part at least in regions has a thickness of approx. 0.2 mm, and on the other side is fastened to the open-pored spring layer (13), that the porous spring layer (13) has a thickness of approx. 25 mm and an area-weight of approx. 0.4 kg/ m² to approx. 1.75 kg/m², and that the microporous stiffening layer (14) has a thickness of 1.5 mm to 5.0 mm and an area-weight of 0.6 kg/m² to 1.6 kg/ m².

14. A kit according to claim 9, **characterized in that** the damping layer comprises an approx. 4 mm thin moulded foam layer having an effective spatial weight of approx 40 kg/m³ or an area-weight of approx. 0.2 kg/m² and a relief-like structured surface, wherein this damping layer on the one side lies with this relief-like structured surface on the areal vehicle part, so that the air layer (25) formed between the relief-like structured damping layer and the areal vehicle part at least in regions has a thickness of approx. 0.2 mm, and on the other side is fastened to the open-pored spring layer (13), that the porous spring layer (13) has a thickness of approx. 25 mm and an area-weight of approx. 0.4 kg/m² to approx. 1.75 kg/m², and that the microporous stiffening layer (14) has a thickness of 1.5 mm to 5.0 mm and an area-weight of 0.6 kg/m² to 1.6 kg/m².

15. A kit according to one of the claims 5 to 8 and 10 to 14, **characterized in that** for floor insulation the assembly package (42) comprises a decor layer of approx. 5 mm thickness and an area-weight of 0.4 kg/ m² to 1.0 kg/m².

16. A kit according to one of the claims 5 to 8 and 10 to 14, **characterized in that** for the inner end wall covering the assembly package (42) at the most partially comprises a decor layer of approx. 5 mm thickness and an area-weight of 0.4 kg/m² to 1.0 kg/m².

17. A kit according to one of the claims 1 to 4, **characterized in that** for the roof inner covering the assembly package (42) comprises a relief-like structured surface which, whilst forming an air layer (25), is adhesed to the areal vehicle part and the porous spring layer comprises a stiff thermomoulded foam layer having a compression module of more than 120,000 Pa, a thickness of approx. 13 mm to 17 mm and an area-weight of 0.2 kg/m² to 0.4 kg/m², and the microporous stiffening layer has a thickness of 1.5 mm to 2.0 mm and an area-weight of 0.4 kg/m² to 0.6 kg/m², wherein the porous decor layer has a thickness of approx. 2 mm and an area-weight of approx. 0.21 kg/m².

18. A kit according to one of the claims 1 to 4, **characterized in that** for the roof inner covering the assembly package (42) comprises a relief-like structured surface which, whilst forming an air layer (25), is adhesed to the areal vehicle part and the porous spring layer comprises an open-pored soft PU moulded foam layer having a compression module of less than 60 kPa, a thickness of approx. 20 mm and an area-weight of 0.8 kg/m², and the microporous stiffening layer having a thickness of 1.5 mm to 2.0 mm and an area-weight of 0.4 kg/m² to 0.6 kg/m², wherein the decor layer is porous and has a thickness of approx. 2 mm and an area-weight of approx. 0.21 kg/m².

19. A kit according to one of the claims 1 to 4, **characterized in that** for the roof inner covering the assembly package (42) comprises a relief-like structured surface which, whilst forming an air layer (25), is adhesed to the areal vehicle part, and the porous spring layer comprises a thermoplastic mixed fiber fleece having a density of less than 35 kg/m³, a thickness of approx. 20 mm and an area-weight of 0.7 kg/m², and the stiff microporous stiffening layer has a thickness of 1.5 mm to 2.0 mm and an area-weight of 0.4 kg/m² to 0.6 kg/m², wherein the decor layer is porous and has a thickness of approx. 2 mm and an area-weight of approx. 0.21 kg/m².

20. A kit according to one of the claims 1 to 4, **characterized in that** for the roof inner covering the assembly package (42) comprises a relief-like structured surface which, whilst forming an air layer (25), is adhesed to the areal vehicle part, and the porous spring layer comprises a duroplastic mixed fiber fleece having a density of less than 50 kg/m³, a thickness of approx. 20 mm and an area-weight of approx. 1.0 kg/m², and the microporous stiffening layer has a thickness of 1.5 mm to 2.0 mm and an area-weight of 0.4 kg/m² to 0.6 kg/m², wherein the decor layer is porous and has a thickness of approx. 2 mm and an area-weight of approx. 0.21 kg/m².

21. A kit according to one of claims 1 to 4, **characterized in that** for the roof inner covering the assembly package (42) comprises a relief-like structured surface which, whilst forming an air layer (25), bears against the areal vehicle part, the assembly package additionally comprising an open-pored, stiff carrier layer (26), in particular of a highly pressed, microporous fiber material or a honeycomb-like constructed carrier material having a thickness of approx. 3 to 5 mm and an area-weight of 0.4 to 0.6 kg/m², and the porous spring layer comprises a stiff thermomoulded foam layer having a compression modulus of more than 120,000 Pa, a thickness of approx. 13 mm to 17 mm and an area-weight of 0.2 kg/m² to 0.4 kg/m², and the microporous stiffening layer has a thickness of 1.5 mm to 2.0 mm and an area-weight of 0.4 kg/m² to 0.6 kg/m², the porous decor layer having a thickness of approx. 2 mm and an area-weight of approx. 0.21 kg/m².

22. A kit according to one of claims 1 to 4, **characterized in that** for the roof inner covering the assembly package (42) comprises a relief-like structured surface which, whilst forming an air layer (25), bears against the areal vehicle part, and additionally comprising an open-pored, stiff carrier layer (26), in particular of a highly pressed, microporous fiber material or a honeycomb-like constructed carrier material, of approx. 3 to 5 mm thickness and an area-weight of 0.4 to 0.6 kg/m², the porous spring layer being an open-pored soft PU moulded foam layer with a compression modulus of less than 60 kPa, having a thickness of approx. 20 mm and an area-weight of approx. 0.8 kg/m², and the microporous stiffening layer having a thickness of 1.5 mm to 2.0 mm and an area-weight of 0.4 kg/m² to 0.6 kg/m², wherein the porous decor layer has a thickness of approx. 2 mm and an area-weight of approx. 0.21 kg/m²_{.}

23. A kit according to one of claims 1 to 4, **characterized in that** for the roof inner covering the assembly package (42) comprises a relief-like structured surface which, whilst forming an air layer (25), bears against the areal vehicle part, and additionally comprising an open-pored, stiff carrier layer (26), in particular of a highly pressed, microporous fiber material or a honeycomb-like constructed carrier material, having a thickness of approx. 3 to 5 mm and an area-weight of 0.4 to 0.6 kg/m², and the porous spring layer of a thermoplastic mixed fiber fleece having a density of less than 35 kg/m³, a thickness of approx. 20 mm and an area-weight of approx. 0.7 kg/m², and the microporous stiffening layer having a thickness of 1.5 mm to 2.0 mm and an area-weight of 0.4 kg/m² to 0.6 kg/m², wherein the porous decor layer has a thickness of approx. 2 mm and an area-weight of approx. 0.21 kg/m².

24. A kit according to one of claims 1 to 4, **characterized in that** for the roof inner covering the assembly package (42) comprises a relief-like structured surface which, whilst forming an air layer (25), bears against the areal vehicle part, and additionally comprises an open-pored, stiff carrier layer (26), in particular of a highly pressed, microporous fiber material or a honeycomb-like constructed carrier material, having a thickness of approx. 3 to 5 mm and an area-weight of 0.4 to 0.6 kg/m², and the porous spring layer being of a duroplastic mixed fiber fleece with a density of less than 50 kg/m³, having a thickness of approx. 20 mm and an area-weight of approx. 1.0 kg/m², and the microporous stiffening layer having a thickness of 1.5 mm to 2.0 mm and an area-weight of 0.4 kg/m² to 0.6 kg/m², wherein the porous decor layer has a thickness of approx. 2 mm and an area-weight of approx. 0.21 kg/m².

25. A kit according to one of the claims 21 to 24, **characterized in that** for the roof inner wall between the assembly package (42) and the areal vehicle part at least partially there is arranged a damping layer, which comprises a moulded foam having a thickness of approx. 4 mm and an area-weight of approx. 0.2 kg/m².

26. A kit according to one of the claims 1 to 4, **characterized in that**, for the door covering an approx 25 Aim thin PU foil having a surface weight of approx. 0.003 kg/m² is provided between the air layer (25) and the assembly package (42), the porous layer of the assembly package comprising an approx. 15 mm thick thermomoulded foam having an area-weight of approx. 0.3 kg/m², the microporous stiffening layer having a thickness of approx. 1 mm to 1.5 mm and an area-weight of approx. 0.5 kg/m², and the porous, in particular open-pored decor layer having an area-weight of approx. 0.21 kg/m² and a thickness of approx. 2 mm.

27. A kit according to one of the claims 1 to 4, **characterized in that,** for the door covering an approx 25 µm thin PU foil having a surface weight of approx. 0.003 kg/m² is provided between the air layer (25) and the assembly package (42), the porous layer of the assembly package comprising an approx. 15 mm thick moulded foam layer having an area-weight of approx. 0.6 kg/m² to 0.9 kg/m², the microporous stiffening layer having a thickness of approx. 1 mm to 1.5 mm and an area-weight of approx. 0.5 kg/m², and the porous, in particular open-pored decor layer having an area-weight of approx. 0.21 kg/ m² and a thickness of approx. 2 mm.

28. A kit according to one of the claims 1 to 4, **characterized in that** for the door covering an approx 25 µm thin PU foil with approx. 0.003 kg/m² surface weight is provided between the air layer (25) and the assembly package (42), the porous layer of the assembly package comprising an approx. 15 mm thick thermoplastic mixed fiber fleece having a density of less than approx. 35 kg/m³ and an area-weight of approx. 0.5 kg/m², the microporous stiffening layer having a thickness of approx. 1 mm to 1.5 mm and an area-weight of approx. 0.5 kg/m², and the porous, in particular open-pored decor layer having an area-weight of approx. 0.21 kg/m² and a thickness of approx. 2 mm.

29. A kit according to one of the claims 1 to 4, **characterized in that,** for the door covering an approx 25 µm thin PU foil having a surface weight of approx. 0.003 kg/m² is provided between the air layer (25) and the assembly package (42), the porous layer of the assembly package comprising an approx. 15 mm thick duroplastic mixed fiber fleece having a density of less than approx. 50 kg/m³ and an area-weight of approx. 0.75 kg/m², the microporous stiffening layer having a thickness of approx. 1 mm to 1.5 mm and an area-weight of approx. 0.5 kg/m², and the porous, in particular open-pored decor layer having an area-weight of approx. 0.21 kg/m² and a thickness of approx. 2 mm.

30. A kit according to one of the claims 26 to 29, **characterized in that** the areal vehicle part at least partially is provided with a damping layer, comprising a multi-layered, approx. 2.3 mm thick ultra-light damping material having an area-weight of approx. 2.67 kg/m² and with at least an approx. 0.1 mm thin aluminium foil.

31. A kit according to one of the claims 26 to 29, **characterized in that** the areal vehicle part at least partially is provided with a damping layer, which comprises a multi-layered, approx. 2.3 mm thick, ultra-light damping material with an area-weight of approx. 2.67 kg/m² and with at least an approx. 0.1 mm thin foil of fiber-reinforced plastic paper, whereby the area-weight of the multi-layered damping layer is approx. 2.54 kg/m².

32. A kit according to claim 3, **characterized in that** for the end wall covering of the motor space side the assembly package (42) on the motor space side is provided with a dirt-resistant protective layer, in particular an oil and water resistant protective fleece, the microporous stiffening layer being arranged between the spring layer and this protective layer, wherein the stiffening layer comprises a highly pressed fiber material having a thickness of approx. 2.5 mm and an area-weight of approx 1.0 kg/m², the open-pored spring layer of the assembly package (42) comprising an approx. 15 mm thick thermomoulded foam having an area-weight of approx. 0.3 kg/m², and the protective layer on the motor space side having a thickness of 0.2 to 0.4 mm and an area-weight of 0.1 to 0.3 kg/m².

33. A kit according to claim 3, **characterized in that** for the end wall covering on the motor space side the assembly package (42) on the motor space side is provided with a dirt-resistant protective layer, in particular an oil and water resistant protective fleece, the microporous stiffening layer being arranged between the spring layer and this protective layer, wherein the stiffening layer comprises a highly pressed fiber material having a thickness of approx. 2.5 mm and an area-weight of approx 1.0 kg/m², the open-pored spring layer of the assembly package (42) comprising an approx. 15 mm thick PU moulded foam having an area-weight of approx. 0.6 kg/m² to 0.9 kg/m², and the protective layer on the motor space side having a thickness of 0.2 to 0.4 mm and an area-weight of 0.1 to 0.3 kg/m².

34. A kit according to claim 3, **characterized in that** for the end wall covering on the motor space side the assembly package (42) on the motor space side is provided with a dirt-resistant protective layer, in particular an oil and water resistant protective fleece, the microporous stiffening layer being arranged between the spring layer and this protective layer, wherein the stiffening layer comprises a highly pressed fiber material having a thickness of approx. 2.5 mm and an area-weight of approx 1.0 kg/m², the open-pored spring layer of the assembly package (42) comprising an approx. 15 mm thick duroplastic mixed fiber fleece of heat-resistant fibers and having an area-weight of approx. 0.7 kg/m² to 1.0 kg/m², and the protective layer on the motor space side having a thickness of 0.2 to 0.4 mm and an area-weight of 0.1 to 0.3 kg/m².

35. A kit according to one of the claims 32 to 34, **characterized in that** between the air layer (25) and the assembly package (42) there is provided a dirt-resistant protective fleece, having an area-weight of 0.05 kg/m² to 0.15 kg/m² and in particular an oil and water resistant protective fleece.

36. A kit according to claim 3, **characterized in that** the microporous stiffening layer is arranged between the porous spring layer (13) and the air layer (25).

37. A kit according to claim 36, **characterized in that** for the end wall covering on the motor space side the stiffening layer comprises a highly pressed fiber material having a thickness of approx. 2.5 mm and an area-weight of approx. 1.0 kg/m², the open-pored spring layer of the assembly package (42) comprises an approx. 15 mm thick thermomoulded foam having an area-weight of approx. 0.3 kg/m², and on the motor space side there is provided a dirt-resistant protective layer, in particular a water and oil resistant fiber fleece having a thickness of 0.2 to 0.4 mm and an area-weight of 0.1 to 0.3 kg/m².

38. A kit according to claim 36, **characterized in that** for the end wall covering on the motor space side the stiffening layer comprises a highly pressed fiber material having a thickness of approx. 2.5 mm and an area-weight of approx. 1.0 kg/m², the open-pored spring layer of the assembly package (42) comprises an approx. 15 mm thick PU moulded foam having an area-weight of approx. 0.6 kg/m² to 0.9 kg/m², and on the motor space side there is provided a dirt-resistant protective layer, in particular a water and oil resistant fiber fleece having a thickness of 0.2 to 0.4 mm and an area-weight of 0.1 to 0.3 kg/m².

39. A kit according to claim 36, **characterized in that** for the end wall covering on the motor space side the stiffening layer comprises a highly pressed fiber material having a thickness of approx. 2.5 mm and an area-weight of approx. 1.0 kg/m², the open-pored spring layer of the assembly package (42) comprises an approx. 15 mm thick duroplastic mixed fiber fleece of heat-resistant fibers having an area-weight of approx. 0.7 kg/m² to 1.0 kg/m², and on the motor space side there is provided a dirt-resistant protective layer, in particular a water and oil resistant fiber fleece having a thickness of 0.2 to 0.4 mm and an area-weight of 0.1 to 0.3 kg/m².

40. A kit according to one of the claims 32 to 34, 37 to 39, **characterized in that** between the air layer (25) and the assembly package (42) there is provided a foam damping having a thickness of 3.0 mm and an area-weight of approx. 0.12 kg/m².

41. A kit according to one of the claims 1 to 40, **characterized in that** the areal vehicle part is an approx. 0.8 mm thick steel sheeting.

42. A kit according to one of the claims 1 to 40, **characterized in that** the areal vehicle part is an approx. 1.1 mm thick aluminium sheeting.

43. A kit according to one of the claims 1 to 40, **characterized in that** the areal vehicle part is an approx. 1.5 mm thick, fiber-reinforced plastic part, in particular organo-sheeting.

44. A kit according to one of the claims 1 to 40, **characterized in that** the porous spring layer has a heat conductability λ of less than 0.05 W/mK, preferably 0.04 W/mK.

45. An assembly package for a kit according to one of the claims 1 to 44, **characterized in that** this is a heavy-layer-free assembly package (42) of several layers, the assembly package comprising at least one porous spring layer (13), in particular an open-pored foam layer and a microporous stiffening layer (14), in particular an open-pored fiber layer or fiber/foam composite layer, having a total airflow resistance of Rₜ=500 Nsm⁻³ to Rₜ = 2500 Nsm⁻³, in particular from Rₜ = 900 Nsm-³ to Rₜ = 2000 Nsm⁻³, and an areal-mass of m_{F} = 0,3 kg/m² to m_{F} = 2,0 kg/m², in particular of m_{F} = 0,5 kg/m² to m_{F} = 1,6 kg/m².

46. A assembly package according to claim 45, **characterized in that** the microporous stiffening layer (14) has a bending stiffness of B=0.005Nm to B=10.5Nm, in particular from B=0.025Nm to B=6.0Nm.

47. A assembly package according to one of the claims 45 or 46, **characterized in that** this is provided with a damping layer and/or adhesive layer.

## Revendications

1. Ensemble multifonctionnel (41) pour la réduction des bruits et pour l'isolation thermique dans des véhicules afin de former un revêtement absorbant les sons, amortissant le bruit, amortissant les oscillations et isolant de la chaleur , notamment une isolation de plancher ou de tablier, un revêtement de portière ou un revêtement intérieur de toit, comportant au moins une partie de véhicule plane (11) et un paquet de montage (42) en plusieurs couches réduisant le bruit, lequel paquet de montage (42) comprend au moins une couche ressort (13) poreuse, notamment une couche de mousse à pores ouverts, une couche d'air (25) étant prévue entre ce paquet de montage (42) et la partie de véhicule plane, **caractérisé en ce que**, pour former un ensemble (41) ultraléger qui convienne à la combinaison optimale de l'isolation phonique, de l'absorption acoustique et de l'amortissement d'oscillation, le paquet de montage (42) est un paquet de montage sans couche lourde et comprend une couche de rigidification (14) microporeuse, notamment une couche de fibres à pores ouverts ou une couche composite fibre/mousse, qui a une résistance totale au courant d'air de Rₜ = 500 Nsm⁻³ à Rₜ = 2500 Nsm⁻³, notamment de Rₜ = 900 Nsm⁻³ à Rₜ = 2000 Nsm⁻³, et une masse surfacique de m_{F} = 0,3 kg/m² à m_{F} = 2,0 kg/m², notamment de m_{F} = 0,5 kg/m² à m_{F} = 1,6 kg/m².

2. Ensemble selon la revendication 1, **caractérisé en ce que** la couche de rigidification (14) microporeuse a une rigidité en flexion de B = 0,005 Nm à B = 10,5 Nm, notamment de B = 0,025 Nm à B = 6,0 Nm.

3. Ensemble selon l'une des revendications 1 ou 2, **caractérisé en ce que** le paquet de montage (42) est muni d'une couche de couverture (15) poreuse, notamment d'une couche décorative souple ou formant tapis, ou d'une nappe protectrice antisalissante.

4. Ensemble selon l'une des revendications 1 à 3, **caractérisé en ce que** la couche ressort poreuse est agencée entre la couche d'air (25) et la couche de rigidification microporeuse.

5. Ensemble selon l'une des revendications 1 à 4, **caractérisé en ce que** la couche ressort (13) poreuse est constituée d'une mousse thermoformée ayant une faible densité de ρ ≤ 30 kg/m³, notamment de ρ ≤ 15 kg/m³.

6. Ensemble selon l'une des revendications 1 à 4, **caractérisé en ce que** la couche ressort (13) poreuse est constituée d'une mousse formée PU ayant une faible densité de ρ ≤ 70 kg/m³, notamment de ρ ≤ 45 kg/m³.

7. Ensemble selon l'une des revendications 1 à 4, **caractérisé en ce que** la couche ressort (13) poreuse est constituée d'une nappe de fibres mélangées thermoplastique ayant une faible densité de ρ ≤ 70 kg/m³, notamment de ρ ≤ 35 kg/m³.

8. Ensemble selon l'une des revendications 1 à 4, **caractérisé en ce que** la couche ressort (13) poreuse est constituée d'une nappe de fibres thermodurcissable ayant une faible densité de ρ ≤ 70 kg/m³, notamment de ρ ≤ 50 kg/m³.

9. Ensemble selon l'une des revendications 5 à 8, **caractérisé en ce qu'**il est agencé au moins en partie entre le paquet de montage (42) et la partie de véhicule plane (11) une couche d'amortissement (12).

10. Ensemble selon la revendication 9, **caractérisé en ce que** la couche d'amortissement (12) a une épaisseur d'environ 2,2 mm et est constituée d'un matériau d'amortissement ultraléger ayant un poids surfacique d'environ 2,4 kg/m², cette couche d'amortissement étant collée sur la partie de véhicule plane et la couche d'air (25) formée par un appui en relief du paquet de montage (42) entre le paquet de montage et la couche d'amortissement ayant une épaisseur d'environ 0,2 mm, la couche ressort (13) poreuse ayant une épaisseur d'environ 25 mm et un poids surfacique d'environ 0,4 kg/m² à environ 1,75 kg/m², la couche de rigidification (14) microporeuse ayant une épaisseur de 1,5 mm à 5,0 mm et un poids surfacique de 0,6 kg/m² à 1,6 kg/m².

11. Ensemble selon la revendication 9, **caractérisé en ce que** la couche d'amortissement est constituée d'un matériau d'amortissement ultraléger à plusieurs couches, comprenant au moins une feuille d'aluminium mince d'environ 0,2 mm et ayant un poids surfacique d'environ 2,94 kg/m², cette couche d'amortissement étant collée sur la partie de véhicule plane et la couche d'air (25) formée par un appui en relief du paquet de montage (42) entre le paquet de montage et la couche d'amortissement ayant une épaisseur d'environ 0,2 mm, **en ce que** la couche ressort poreuse a une épaisseur d'environ 25 mm et un poids surfacique de 0,4 kg/m² à 1,75 kg/m² et **en ce que** la couche de rigidification microporeuse a une épaisseur de 1,5 mm à 5,0 mm et un poids surfacique de 0,6 kg/m² à 1,6 kg/m².

12. Ensemble selon la revendication 9, **caractérisé en ce que** la couche d'amortissement est constituée d'un matériau d'amortissement ultraléger à plusieurs couches, comprenant au moins un papier plastique renforcé par des fibres et mince d'environ 0,2 mm et ayant un poids surfacique d'environ 2,67 kg/m², cette couche d'amortissement étant collée sur la partie de véhicule plane et la couche d'air (25) formée par un appui en relief du paquet de montage (42) entre le paquet de montage et la couche d'amortissement ayant une épaisseur d'environ 0,2 mm, **en ce que** la couche ressort poreuse a une épaisseur d'environ 25 mm et un poids surfacique de 0,4 kg/m² à 1,75 kg/m² et **en ce que** la couche de rigidification microporeuse a une épaisseur de 1,5 mm à 5,0 mm et un poids surfacique de 0,6 kg/ m² à 1,6 kg/m².

13. Ensemble selon la revendication 9, **caractérisé en ce que** la couche d'amortissement a une épaisseur d'environ 2,0 mm et est constituée d'un matériau d'amortissement EPDM ultraléger, notamment sans bitume, ayant un poids surfacique d'environ 2,4 kg/m² et une surface structurée en relief, cette couche d'amortissement reposant d'une part avec cette surface structurée en relief sur la partie de véhicule plane de telle sorte que la couche d'air (25) formée entre la couche d'amortissement structurée en relief et la partie de véhicule plane a au moins par zones une épaisseur d'environ 0,2 mm et étant fixée d'autre part à la couche ressort (13) poreuse, **en ce que** la couche ressort poreuse a une épaisseur d'environ 25 mm et un poids surfacique d'environ 0,4 kg/m² à environ 1,75 kg/m² et **en ce que** la couche de rigidification microporeuse a une épaisseur de 1,5 mm à 5,0 mm et un poids surfacique de 0,6 kg/m² à 1,6 kg/m².

14. Ensemble selon la revendication 9, **caractérisé en ce que** la couche d'amortissement est constituée d'une couche de mousse formée mince d'environ 4 mm ayant un poids volumique effectif d'environ 40 kg/m³, et un poids surfacique d'environ 0,2 kg/m², et une surface structurée en relief, cette couche d'amortissement reposant d'une part avec cette surface structurée en relief sur la partie de véhicule plane de telle sorte que la couche d'air (25) formée entre la couche d'amortissement structurée en relief et la partie de véhicule plane a au moins par zones une épaisseur d'environ 0,2 mm et étant fixée d'autre part à la couche ressort poreuse, **en ce que** la couche ressort poreuse a une épaisseur d'environ 25 mm et un poids surfacique de 0,4 kg/m² à 1,75 kg/m² et **en ce que** la couche de rigidification microporeuse a une épaisseur de 1,5 mm à 5,0 mm et un poids surfacique de 0,6 kg/m² à 1,6 kg/m².

15. Ensemble selon l'une des revendications 5 à 8 et 10 à 14, **caractérisé en ce que**, pour l'isolation de plancher, le paquet de montage (42) comporte une couche décorative ayant une épaisseur d'environ 5 mm et un poids surfacique de 0,4 kg/m² à 1,0 kg/m².

16. Ensemble selon l'une des revendications 5 à 8 et 10 à 14, **caractérisé en ce que**, pour le revêtement intérieur de tablier, le paquet de montage (42) comporte au moins en partie une couche décorative ayant une épaisseur d'environ 5 mm et un poids surfacique de 0,4 kg/m² à 1,0 kg/m².

17. Ensemble selon l'une des revendications 1 à 4, **caractérisé en ce que**, pour le revêtement intérieur de toit, le paquet de montage (42) a une surface structurée en relief qui est collée à la partie de véhicule plane en formant une couche d'air (25), **en ce que** la couche ressort poreuse est constituée d'une couche de mousse thermoformée rigide ayant un module de compression de plus de 120 000 Pa, une épaisseur d'environ 13 mm à 17 mm et un poids surfacique de 0,2 kg/m² à 0,4 kg/m² et **en ce que** la couche de rigidification microporeuse a une épaisseur de 1,5 mm à 2,0 mm et un poids surfacique de 0,4 kg/m² à 0,6 kg/m², la couche décorative poreuse ayant une épaisseur d'environ 2 mm et un poids surfacique d'environ 0,21 kg/m².

18. Ensemble selon l'une des revendications 1 à 4, **caractérisé en ce que**, pour le revêtement intérieur de toit, le paquet de montage (42) a une surface structurée en relief qui est collée à la partie de véhicule plane en formant une couche d'air (25), **en ce que** la couche ressort poreuse est constituée d'une couche de mousse formée PU souple à pores ouverts ayant un module de compression de moins de 60 kPa, une épaisseur d'environ 20 mm et un poids surfacique d'environ 0,8 kg/m² et **en ce que** la couche de rigidification microporeuse a une épaisseur de 1,5 mm à 2,0 mm et un poids surfacique de 0,4 kg/m² à 0,6 kg/m², la couche décorative étant poreuse et ayant une épaisseur d'environ 2 mm et un poids surfacique d'environ 0,21 kg/m².

19. Ensemble selon l'une des revendications 1 à 4, **caractérisé en ce que**, pour le revêtement intérieur de toit, le paquet de montage (42) a une surface structurée en relief qui est collée à la partie de véhicule plane en formant une couche d'air (25), **en ce que** la couche ressort poreuse est constituée d'une nappe de fibres mélangées thermoplastique ayant une densité de moins de 35 kg/m³, une épaisseur d'environ 20 mm et un poids surfacique d'environ 0,7 kg/m² et **en ce que** la couche de rigidification microporeuse rigide a une épaisseur de 1,5 mm à 2,0 mm et un poids surfacique de 0,4 kg/m² à 0,6 kg/m², la couche décorative étant poreuse et ayant une épaisseur d'environ 2 mm et un poids surfacique d'environ 0,21 kg/m².

20. Ensemble selon l'une des revendications 1 à 4, **caractérisé en ce que**, pour le revêtement intérieur de toit, le paquet de montage (42) a une surface structurée en relief qui est collée à la partie de véhicule plane en formant une couche d'air (25), **en ce que** la couche ressort poreuse est constituée d'une nappe de fibres mélangées thermodurcissable ayant une densité de moins de 50 kg/m³, une épaisseur d'environ 20 mm et un poids surfacique d'environ 1,0 kg/m² et **en ce que** la couche de rigidification microporeuse a une épaisseur de 1,5 mm à 2,0 mm et un poids surfacique de 0,4 kg/m² à 0,6 kg/m², la couche décorative étant poreuse et ayant une épaisseur d'environ 2 mm et un poids surfacique d'environ 0,21 kg/m².

21. Ensemble selon l'une des revendications 1 à 4, **caractérisé en ce que**, pour le revêtement intérieur de toit, le paquet de montage (42) a une surface structurée en relief qui est collée à la partie de véhicule plane en formant une couche d'air (25), lequel paquet de montage comporte en plus une couche porteuse (26) rigide à pores ouverts, notamment en un matériau en fibres microporeux et très comprimé ou en un matériau porteur à structure en nid d'abeille, ayant une épaisseur d'environ 3 à 5 mm et un poids surfacique de 0,4 à 0,6 kg/m², **en ce que** la couche ressort poreuse est constituée d'une couche de mousse thermoformée rigide ayant un module de compression de plus de 120 000 Pa, une épaisseur d'environ 13 mm à 17 mm et un poids surfacique de 0,2 kg/m² à 0,4 kg/m² et **en ce que** la couche de rigidification microporeuse a une épaisseur de 1,5 mm à 2,0 mm et un poids surfacique de 0,4 kg/m² à 0,6 kg/m², la couche décorative poreuse ayant une épaisseur d'environ 2 mm et un poids surfacique d'environ 0,21 kg/m².

22. Ensemble selon l'une des revendications 1 à 4, **caractérisé en ce que**, pour le revêtement intérieur de toit, le paquet de montage (42) a une surface structurée en relief qui est collée à la partie de véhicule plane en formant une couche d'air (25), lequel paquet de montage comporte en plus une couche porteuse (26) rigide à pores ouverts, notamment en un matériau en fibres microporeux et très comprimé ou en un matériau porteur à structure en nid d'abeille, ayant une épaisseur d'environ 3 à 5 mm et un poids surfacique de 0,4 à 0,6 kg/m², **en ce que** la couche ressort poreuse est constituée d'une couche de mousse formée PU souple à pores ouverts et ayant un module de compression de moins de 60 kPa, une épaisseur d'environ 20 mm et un poids surfacique d'environ 0,8 kg/m² et **en ce que** la couche de rigidification microporeuse a une épaisseur de 1,5 mm à 2,0 mm et un poids surfacique de 0,4 kg/ m² à 0,6 kg/m², la couche décorative étant poreuse et ayant une épaisseur d'environ 2 mm et un poids surfacique d'environ 0,21 kg/m².

23. Ensemble selon l'une des revendications 1 à 4, **caractérisé en ce que**, pour le revêtement intérieur de toit, le paquet de montage (42) a une surface structurée en relief qui est collée à la partie de véhicule plane en formant une couche d'air (25), lequel paquet de montage comporte en plus une couche porteuse (26) rigide à pores ouverts, notamment en un matériau en fibres microporeux et très comprimé ou en un matériau porteur à structure en nid d'abeille, ayant une épaisseur d'environ 3 à 5 mm et un poids surfacique de 0,4 à 0,6 kg/m², **en ce que** la couche ressort poreuse est constituée d'une nappe de fibres mélangées thermoplastique ayant une densité de moins de 35 kg/m³, une épaisseur d'environ 20 mm et un poids surfacique d'environ 0,7 kg/m² et **en ce que** la couche de rigidification microporeuse rigide a une épaisseur de 1,5 mm à 2,0 mm et un poids surfacique de 0,4 kg/m² à 0,6 kg/m², la couche décorative étant poreuse et ayant une épaisseur d'environ 2 mm et un poids surfacique d'environ 0,21 kg/m².

24. Ensemble selon l'une des revendications 1 à 4, **caractérisé en ce que**, pour le revêtement intérieur de toit, le paquet de montage (42) a une surface structurée en relief qui est collée à la partie de véhicule plane en formant une couche d'air (25), lequel paquet de montage comporte en plus une couche porteuse (26) rigide à pores ouverts, notamment en un matériau en fibres microporeux et très comprimé ou en un matériau porteur à structure en nid d'abeille, ayant une épaisseur d'environ 3 à 5 mm et un poids surfacique de 0,4 à 0,6 kg/m², **en ce que** la couche ressort poreuse est constituée d'une nappe de fibres mélangées thermodurcissable ayant une densité de moins de 50 kg/m³, une épaisseur d'environ 20 mm et un poids surfacique d'environ 1,0 kg/m² et **en ce que** la couche de rigidification microporeuse a une épaisseur de 1,5 mm à 2,0 mm et un poids surfacique de 0,4 kg/m² à 0,6 kg/m², la couche décorative étant poreuse et ayant une épaisseur d'environ 2 mm et un poids surfacique d'environ 0,21 kg/m².

25. Ensemble selon l'une des revendications 21 à 24, **caractérisé en ce que**, pour le revêtement intérieur de toit, il est agencé au moins en partie entre le paquet de montage (42) et la partie de véhicule plane une couche d'amortissement qui est constituée d'une mousse formée ayant une épaisseur d'environ 4 mm et un poids surfacique d'environ 0,2 kg/ m².

26. Ensemble selon l'une des revendications 1 à 4, **caractérisé en ce que,** pour le revêtement de portière, une feuille PU mince d'environ 25 µm ayant un poids surfacique d'environ 0,03 kg/m² est prévue entre la couche d'air (25) et le paquet de montage (42), **en ce que** la couche ressort poreuse du paquet de montage est constituée d'une mousse thermoformée ayant une épaisseur d'environ 15 mm et un poids surfacique d'environ 0,3 kg/m², **en ce que** la couche de rigidification microporeuse a une épaisseur d'environ 1 mm à 1,5 mm et un poids surfacique d'environ 0,5 kg/m² et **en ce que** la couche décorative poreuse, notamment à pores ouverts, a un poids surfacique d'environ 0,21 kg/m² et une épaisseur d'environ 2 mm.

27. Ensemble selon l'une des revendications 1 à 4, **caractérisé en ce que**, pour le revêtement de portière, une feuille PU mince d'environ 25 µm ayant un poids surfacique d'environ 0,03 kg/m² est prévue entre la couche d'air (25) et le paquet de montage (42), **en ce que** la couche ressort poreuse du paquet de montage est constituée d'une couche de mousse formée PU ayant une épaisseur d'environ 15 mm et un poids surfacique de 0,6 kg/m² à 0,9 kg/m², **en ce que** la couche de rigidification microporeuse a une épaisseur de 1 mm à 1,5 mm et un poids surfacique d'environ 0,5 kg/m² et **en ce que** la couche décorative poreuse, notamment à pores ouverts, a un poids surfacique d'environ 0,21 kg/m² et une épaisseur d'environ 2 mm.

28. Ensemble selon l'une des revendications 1 à 4, **caractérisé en ce que,** pour le revêtement de portière, une feuille PU mince d'environ 25 µm ayant un poids surfacique d'environ 0,03 kg/m² est prévue entre la couche d'air (25) et le paquet de montage (42), **en ce que** la couche ressort poreuse du paquet de montage est constituée d'une nappe de fibres mélangées thermoplastique ayant une épaisseur d'environ 15 mm, une densité de moins d'environ 35 kg/m³ et un poids surfacique d'environ 0,5 kg/ m², **en ce que** la couche de rigidification microporeuse a une épaisseur de 1 mm à 1,5 mm et un poids surfacique d'environ 0,5 kg/m² et **en ce que** la couche décorative poreuse, notamment à pores ouverts, a un poids surfacique d'environ 0,21 kg/m² et une épaisseur d'environ 2 mm.

29. Ensemble selon l'une des revendications 1 à 4, **caractérisé en ce que,** pour le revêtement de portière, une feuille PU mince d'environ 25 µm ayant un poids surfacique d'environ 0,03 kg/m² est prévue entre la couche d'air (25) et le paquet de montage (42), **en ce que** la couche ressort poreuse du paquet de montage est constituée d'une nappe de fibres mélangées thermodurcissable ayant une épaisseur d'environ 15 mm, une densité de moins d'environ 50 kg/m³ et un poids surfacique d'environ 0,75 kg/ m², **en ce que** la couche de rigidification microporeuse a une épaisseur de 1 mm à 1,5 mm et un poids surfacique d'environ 0,5 kg/m² et **en ce que** la couche décorative poreuse, notamment à pores ouverts, a un poids surfacique d'environ 0,21 kg/m² et une épaisseur d'environ 2 mm.

30. Ensemble selon l'une des revendications 26 à 29, **caractérisé en ce que** la partie de véhicule plane est munie au moins en partie d'une couche d'amortissement qui est constituée d'un matériau d'amortissement ultraléger en plusieurs couches avec une épaisseur d'environ 2,3 mm et un poids surfacique d'environ 2,67 kg/m² et avec au moins une feuille d'aluminium mince d'environ 0,1 mm.

31. Ensemble selon l'une des revendications 26 à 29, **caractérisé en ce que** la partie de véhicule plane est munie au moins en partie d'une couche d'amortissement qui est constituée d'un matériau d'amortissement ultraléger en plusieurs couches avec une épaisseur d'environ 2,3 mm et un poids surfacique d'environ 2,67 kg/m² et avec au moins une feuille mince d'environ 0,1 mm en papier plastique renforcé par des fibres, le poids surfacique de la couche d'amortissement en plusieurs couches valant environ 2,54 kg/m².

32. Ensemble selon la revendication 3, **caractérisé en ce que**, pour le revêtement de tablier du côté du moteur, le paquet de montage (42) du côté du moteur est muni d'une couche protectrice antisalissante, notamment d'une nappe protectrice rejetant l'huile et l'eau, la couche de rigidification microporeuse étant agencée entre la couche ressort et cette couche protectrice, la couche de rigidification étant constituée d'un matériau en fibres très comprimé ayant une épaisseur d'environ 2,5 mm et un poids surfacique d'environ 1,0 kg/m², la couche ressort à pores ouverts du paquet de montage (42) étant constituée d'une mousse thermoformée ayant une épaisseur d'environ 15 mm et un poids surfacique d'environ 0,3 kg,m² et la couche protectrice du côté du moteur ayant une épaisseur de 0,2 à 0,4 mm et un poids surfacique de 0,1 à 0,3 kg/m².

33. Ensemble selon la revendication 3, **caractérisé en ce que**, pour le revêtement de tablier du côté du moteur, le paquet de montage (42) du côté du moteur est muni d'une couche protectrice antisalissante, notamment d'une nappe protectrice rejetant l'huile et l'eau, la couche de rigidification microporeuse étant agencée entre la couche ressort et cette couche protectrice, la couche de rigidification étant constituée d'un matériau en fibres très comprimé ayant une épaisseur d'environ 2,5 mm et un poids surfacique d'environ 1,0 kg/m², la couche ressort à pores ouverts du paquet de montage (42) étant constituée d'une mousse formée PU ayant une épaisseur d'environ 15 mm et un poids surfacique d'environ 0,6 kg/m² à 0,9 kg/m² et la couche protectrice du côté du moteur ayant une épaisseur de 0,2 à 0,4 mm et un poids surfacique de 0,1 à 0,3 kg/ m².

34. Ensemble selon la revendication 3, **caractérisé en ce que**, pour le revêtement de tablier du côté du moteur, le paquet de montage (42) du côté du moteur est muni d'une couche protectrice antisalissante, notamment d'une nappe protectrice rejetant l'huile et l'eau, la couche de rigidification microporeuse étant agencée entre la couche ressort et cette couche protectrice, la couche de rigidification étant constituée d'un matériau en fibres très comprimé ayant une épaisseur d'environ 2,5 mm et un poids surfacique d'environ 1,0 kg/m², la couche ressort à pores ouverts du paquet de montage (42) étant constituée d'une nappe de fibres mélangées thermoplastique composée de fibres résistantes à la chaleur et ayant une épaisseur d'environ 15 mm et un poids surfacique d'environ 0,7 kg/m² à 1,0 kg/ m² et la couche protectrice du côté du moteur ayant une épaisseur de 0,2 à 0,4 mm et un poids surfacique de 0,1 à 0,3 kg/m².

35. Ensemble selon l'une des revendications 32 à 34, **caractérisé en ce qu'**il est prévu entre la couche d'air (25) et le paquet de montage (42) une nappe protectrice antisalissante qui a un poids surfacique de 0,05 kg/m² à 0,15 kg/m² et qui est notamment une nappe protectrice rejetant l'huile et l'eau.

36. Ensemble selon la revendication 3, **caractérisé en ce que** la couche de rigidification microporeuse est agencée entre la couche ressort poreuse (13) et la couche d'air (25).

37. Ensemble selon la revendication 36, **caractérisé en ce que**, pour le revêtement de tablier du côté du moteur, la couche de rigidification est constituée d'un matériau en fibres très comprimé ayant une épaisseur d'environ 2,5 mm et un poids surfacique d'environ 1,0 kg/m², la couche ressort à pores ouverts du paquet de montage (42) étant constituée d'une mousse thermoformée ayant une épaisseur d'environ 15 mm et un poids surfacique d'environ 0,3 kg/ m² et **en ce qu'**il est prévu du côté du moteur une couche protectrice antisalissante, notamment une nappe de fibres rejetant l'eau et l'huile, ayant une épaisseur de 0,2 à 0,4 mm et un poids surfacique de 0,1 à 0,3 kg/m².

38. Ensemble selon la revendication 36, **caractérisé en ce que**, pour le revêtement de tablier du côté du moteur, la couche de rigidification est constituée d'un matériau en fibres très comprimé ayant une épaisseur d'environ 2,5 mm et un poids surfacique d'environ 1,0 kg/m², la couche ressort à pores ouverts du paquet de montage (42) étant constituée d'une mousse formée PU ayant une épaisseur d'environ 15 mm et un poids surfacique de 0,6 kg/m² à 0,9 kg/m² et **en ce qu'**il est prévu du côté du moteur une couche protectrice antisalissante, notamment une nappe de fibres rejetant l'eau et l'huile, ayant une épaisseur de 0,2 à 0,4 mm et un poids surfacique de 0,1 à 0,3 kg/m².

39. Ensemble selon la revendication 36, **caractérisé en ce que,** pour le revêtement de tablier du côté du moteur, la couche de rigidification est constituée d'un matériau en fibres très comprimé ayant une épaisseur d'environ 2,5 mm et un poids surfacique d'environ 1,0 kg/m², la couche ressort à pores ouverts du paquet de montage (42) étant constituée d'une nappe de fibres mélangées thermodurcissable composée de fibres résistantes à la chaleur et ayant une épaisseur d'environ 15 mm et un poids surfacique de 0,7 kg/m² à 1,0 kg/m² et **en ce qu'**il est prévu du côté du moteur une couche protectrice antisalissante, notamment une nappe de fibres rejetant l'eau et l'huile, ayant une épaisseur de 0,2 à 0,4 mm et un poids surfacique de 0,1 à 0,3 kg/m².

40. Ensemble selon l'une des revendications 32 à 34, 37 à 39, **caractérisé en ce qu'**il est prévu entre la couche d'air (25) et le paquet de montage (42) une mousse d'amortissement qui a une épaisseur de 3,0 mm et un poids surfacique d'environ 0,12 kg/m².

41. Ensemble selon l'une des revendications 1 à 40, **caractérisé en ce que** la partie de véhicule plane est une tôle d'acier d'environ 0,8 mm d'épaisseur.

42. Ensemble selon l'une des revendications 1 à 40, **caractérisé en ce que** la partie de véhicule plane est une tôle d'aluminium d'environ 1,1 mm d'épaisseur.

43. Ensemble selon l'une des revendications 1 à 40, **caractérisé en ce que** la partie de véhicule plane est une pièce en plastique renforcée par des fibres, notamment une tôle organique, d'environ 1,5 mm d'épaisseur.

44. Ensemble selon l'une des revendications 1 à 43, **caractérisé en ce que** la couche ressort poreuse a une conductibilité thermique λ de moins de 0,05 W/mK, de préférence 0,04 W/mK.

45. Paquet de montage pour un ensemble selon l'une des revendications 1 à 44, **caractérisé en ce que** ce paquet de montage est un paquet de montage (42) sans couche lourde, ce paquet de montage est un paquet de montage (42) en plusieurs couches comprenant au moins une couche ressort (13) poreuse, notamment une couche de mousse à pores ouverts une couche de rigidification (14) microporeuse, notamment une couche de fibres à pores ouverts ou une couche composite fibre/mousse, qui a une résistance totale au passage de l'air de Rₜ=500 Nsm⁻³ à Rₜ = 2500 Nsm⁻³, notamment de Rₜ = 900 Nsm⁻³ à Rₜ = 2000 Nsm⁻³, et une masse surfacique de m_{F} = 0,3 kg/m² à m_{F} = 2,0 kg/m², notamment de m_{F} = 0,5 kg/m² à m_{F} = 1,6 kg/m².

46. Paquet de montage selon la revendication 45, **caractérisé en ce que** la couche de rigidification (14) microporeuse a une rigidité en flexion de B = 0,005 Nm à B = 10,5 Nm, notamment de B = 0,025 Nm à B = 6,0 Nm.

47. Paquet de montage selon l'une des revendications 45 ou 46, **caractérisé en ce que** ce paquet de montage est muni d'une couche d'amortissement et/ou d'une couche adhésive.
